# EUROPEAN PATENT APPLICATION

(11) **EP 0 902 590 A2**
(43) Date of publication of application: **17.03.1999**
(21) Application number: 98307414.7
(22) Date of filing: 14.09.1998
(51) Int. Cl.: H04N 7/24

(54) **Integrated communication system**

(30) Priority: 12.09.1997 IL 12175697
(71) Applicant: ECI TELECOM LTD., 49 130 Petach Tikva (IL)
(72) Inventor: Benjamin, Shai, Los Angeles, CA (US); Lichtenstein, Zeev, Tel Aviv 64234 (IL); Sheinin, Vadim, Petach Tikva 49413 (IL); Nissim, Dror, Givatayim 53237 (IL); Kahani, David, Gan Yavne 70800 (IL); Ben Tsur, Yosef, Tel Aviv 62745 (IL)
(74) Representative: Cross, Rupert Edward Blount

(57) **Abstract**

Apparatus for video, audio and data communication of a transport stream via an ATM WAN, the transport stream including at least one of at least one video stream, at least one data stream, and at least one audio stream. The apparatus includes a video service module for modifying at least one video stream, a data and audio services module for modifying at least one data stream and at least one audio stream, a network interface module, communicating with the video service module and the data and audio services module, and operative to transmit the modified streams over the ATM WAN, and a controller communicating with the video service module, the data and audio service module, and the network interface module for controlling the various functions thereof.

Related apparatus and methods are also provided.

## Description

### FIELD OF THE INVENTION

The present invention relates to communication systems in general, and in particular to methods and apparatus for video, audio and data communications in particular.

### BACKGROUND OF THE INVENTION

TV companies have for many years largely controlled video communications, with video usually being broadcast in analog form to provide the same content to many viewers simultaneously. Person-to-person communications of professional-quality video are typically accomplished by physically sending a videotape via mail or courier, and occasionally through expensive and cumbersome satellite services. Recent trends, however, have seen video communications increasingly being provided by telecommunications companies in digital form on a switched basis comprising person-to-person video communications over standard telecommunication lines.

Two major technological aspects may be used differentiate between various methods of video communications the video quality provided by the method; and the switching capabilities of the method. The video quality determines the applications that can be supported and the bandwidth, standards, technologies and surrounding TV equipment. While there are myriad distinctions in video quality, three major video quality categories include Master Copy, Consumer Quality, and Business Video Conferencing Quality.

Master-copy quality is the quality used in the production and editing of video content (movies, features and advertisements), for delivery of "master copy" of video to TV programmers, and for certain types of professional Tele-consulting and Tele-training which are used, for example, in the medical field. Typical transmission bit rates for master-copy quality, using current technologies, range between 34Mb/s to 270Mb/s.

Consumer Quality Video is suitable for viewing on a conventional consumer TV set, but is not suited to further manipulation such as editing, format conversion, or other typical manipulation. Consumer Quality Video is used in Video On Demand, multimedia home shopping and similar services, digital cable TV and digital satellite-to-home TV. Typical transmission bit rates for consumer quality video range between 1.5Mb/s to 15Mb/s.

Business Video Conferencing Quality Video is generally used for business communications and remote business training, and is suited to fixed-background, low-movement video environments. Typical transmission bit rates for business video conferencing quality range between 112Kb/s to 2Mb/s.

In addition to video quality, switching requirements constitute another major distinction between video communications services. In broadcaster to local distributor service, such as between a TV "network" and a local TV broadcasting station or between a cable programmer and local CATV "headend", leased line service or a leased satellite transponder suffices for real-time distribution of programming because such connections generally stay in place for years and require no switching and only occasional reconfiguration. In broadcaster to subscriber service, such as over the air, CATV or DBS, again no switching is required as each program is transmitted once in a predetermined "channel", and each subscriber tunes the desired channel, as is well known in the art. In content-provider to subscriber services, such as Video on Demand, only limited switching is required from the content provider to subscribers, and is initiated by the content provider, and not by the subscriber. In switched subscriber to subscriber services, such as between video post-production shops and their customers and sport stadiums and broadcasters, full switching is required for video communications.

Recent technological developments in the areas of quality video transmission and switching have presented telecommunications companies outside the television industry with the opportunity to enter the video communications market. Voice networks, data networks and video networks have generally required different technologies and equipment, with a separate network dedicated to each purpose, negating economies of scale between them. However, with the development of technologies such as broadband digital communications (ATM, SONET and SDH) and advances in video digitization and compression, the opportunity arises for a single type of network to service all these needs, making it economically attractive for telecommunications companies to provide video communications on a large scale.

Provision of digital video communications across broadband networks raises a host of specific issues. One such issue, already addressed in the prior art, relates to the handling of ancillary data present in certain horizontal scanning lines in vertical blanking intervals European patent application EP 0740474 is believed to represent the state of the art in this regard.

US patent application 08/931,091, which is co-pending and commonly owned with the current application, describes a related television integrated communications system

The disclosures of all references mentioned above and throughout the present specification are hereby incorporated herein by reference

### SUMMARY OF THE INVENTION

The present invention seeks to provide novel apparatus and methods for switched, subscriber-to-subscriber networking for transmission of various forms of high-quality video.

Aspects of the present invention provide an improved system that overcomes problems of the prior art mentioned above.

A communication system is provided wherein a Network Service Provider may provide and manage a video networking service for TV professionals, typically by employing a wide area ATM network. An interface is provided between subscriber TV and audio equipment such as professional video tape recorders, cameras, TV monitors and videodisks on one side; and the wide area ATM network on the other side.

Subscribers may "dial" other subscribers at will, and transfer to them high-quality TV content at viewing transmission rates, at a service level they select. The terms "viewing transmission rate" and "viewing rate" are used interchangeably throughout the present specification and claims to refer to any transmission rate suitable for real-time viewing.

Video and audio compression, ATM adaptation, multiplexing, user-to-network signaling and user-to-user signaling are automatically performed. Additionally, TV content may be transferred in a file-transfer mode.

A major need in the field of ATM video communications is an effective and convenient support of a broad range of user needs in a single product. An integrated system offers significant economic and operational benefits.

An integrated system, in accordance with a preferred embodiment of the present invention preferably comprises means for modular handling and compression of various I/Os. The integrated system further preferably comprises means supporting ATM adaptation, multiplexing and ATM network interfacing as well as user-to-user signaling. A single unified management system is typically used for the management of all the services supported by the integrated system.

Additionally, the integrated system preferably suppons the use of "communication sessions". A single "communication session" may comprise one or more TV channels and programs along with one or more data and voice channels. The system provides for the definition of session parameters using templates. An operator of one of the two systems may perform coordination of the parameters of two communicating systems using the defined template, via the user-to-user signaling service.

High quality and medium-quality conventional TV is preferably supported at both constant and variable transmission bit rates. Simultaneous handling of multiple TV programs, lossless video compression, handling of precompressed TV and of TV as data, various network interfaces, store-and-forward operation, and other related services such as stand-alone audio are also preferably provided.

Bandwidth efficient transmission of high-quality video over ATM networks involves the solution of a number of problems, as mentioned above. A first such problem relates to bandwidth effective transmission of lossless/near lossless compressed video. A second problem is bandwidth effective handling of ancillary data. Various levels of ancillary data processing, including modulation of VBI and HBI data are provided. Such processing increases the bandwidth efficiency of digital video transmission.

One of the major problems encountered in the transmission of high quality viewing-rate video is timing: cells propagating through an ATM network develop a cell delay variation originating from various sources along the transmission chain. The cell delay variation deteriorates the quality of the received video signal.

The present invention provides a novel dejittering apparatus and method which can keep the jitter level within limits posed by prevailing standards. For a serial interface the typical jitter requirement is 0.74 nsec peak-to-peak measured over one line. The typical jitter limit for composite video signal, such as SMPTE 170M Composite Analog Video Signal NTSC is less than 1 nsec peak-to-peak over one horizontal line. The jitter removal accomplished by the present invention enables the transmission of high quality real time viewing rate video over ATM networks.

Lossless compression mode typically supports transfer of master copy TV, with bit-perfect reconstruction of the REC 601 4:2:2 TV stream at the decoder over a 155 Mbps network access line.

A preferred embodiment of the present invention supports a JPEG-LS based lossless and near-lossless compression based on a per frame determination of a preferable loss-level compression mode. A decision parameter is determined based on lossless compression data including a size of the lossless compressed frame and various algorithm statistics. The decision parameter is used to determine the degree of near lossless compression of the frame.

Preferably, a final compressed frame transmitted over the ATM network comprises YCbCr components originating from different compression sources, such as to obtain an optimal result with respect to both quality and bandwidth efficiency.

Most preferably, the Y component originates from any of a lossless, near lossless or clear channel source and the CbCr components originate from a single similar source different from that of the Y component. Alternatively, all components originate from a single compression source.

There is thus provided in accordance with a preferred embodiment of the present invention apparatus for video, audio and data communication of a transport stream via an ATM WAN, the transport stream including at least one of at least one video stream, at least one data stream, and at least one audio stream, the apparatus including a video service module for modifying at least one video stream, a data and audio services module for modifying at least one data stream and at least one audio stream, a network interface module, communicating with the video service module and the data and audio services module, and operative to transmit the modified streams over the ATM WAN, and a controller communicating with the video service module, the data and audio service module, and the network interface module for controlling the various functions thereof.

Further in accordance with a preferred embodiment of the present invention the video module includes an encoder operative to compression modify the at least one video stream, the at least one data stream and the at least one audio stream.

Still further in accordance with a preferred embodiment of the present invention the encoder includes a video encoder block operative to compression modify the at least one video stream to generate a video elementary stream.

Additionally in accordance with a preferred embodiment of the present invention the video encoder block includes an MPEG-2 compatible video signal encoder.

Moreover in accordance with a preferred embodiment of the present invention the video encoder block includes a lossless/near lossless video signal encoder.

Further in accordance with a preferred embodiment of the present invention the lossless/near lossless video signal encoder includes a decision block operative to decide upon a preferred compression mode on a frame basis

Still further in accordance with a preferred embodiment of the present invention the encoder includes an ancillary data encoder block operative to compression modify ancillary data embedded within the video stream to generate an ancillary data elementary stream

Additionally in accordance with a preferred embodiment of the present invention the ancillary data encoder block includes a VBI data encoder.

Further in accordance with a preferred embodiment of the present invention the ancillary data encoder block includes an HBI data encoder.

Still further in accordance with a preferred embodiment of the present invention the encoder includes an audio encoder block operative to compression modify the at least one audio stream to generate at least one elementary audio stream.

Moreover in accordance with a preferred embodiment of the present invention the audio encoder block includes an MPEG-1 compatible audio encoder.

Further in accordance with a preferred embodiment of the present invention the encoder includes a system multiplexing block operative to multiplex a plurality of elementary streams to a single transport stream.

Still further in accordance with a preferred embodiment of the present invention the encoder includes an AAL encoder block operative to ATM adapt a transport stream prior to communicating the transport stream to the network interface module for transmission over the ATM WAN.

Additionally in accordance with a preferred embodiment of the present invention the AAL encoder block includes an AAL1 layer.

Moreover in accordance with a preferred embodiment of the present invention the at least one video stream includes a real time viewing rate video stream.

Further in accordance with a preferred embodiment of the present invention the at least one video stream includes a precompressed constant bit rate video stream.

Still further in accordance with a preferred embodiment of the present invention the video service module includes a DVB service operative to modify the precompressed video stream.

Moreover in accordance with a preferred embodiment of the present invention the at least one video stream includes a precompressed video file.

Further in accordance with a preferred embodiment of the present invention the at least one audio stream includes an AES/EBU stream.

Still further in accordance with a preferred embodiment of the present invention at least one of the video module and the data and audio module includes a decoder operative to decompression modify at least one of the following the at least one video stream, the at least one data stream, and the at least one audio stream.

Still further in accordance with a preferred embodiment of the present invention the decoder includes an AAL decoder block operative to ATM adapt a transport stream received by the network interface block via the ATM WAN and generate SAR-PDUs.

Additionally in accordance with a preferred embodiment of the present invention the AAL decoder block includes an AAL1 layer.

Moreover in accordance with a preferred embodiment of the present invention the decoder includes a dejittering block operative to smooth a jitter present in the incoming transport stream and extract a clock signal from the incoming transport stream.

Further in accordance with a preferred embodiment of the present invention the dejittering block includes a first 3rd order PLL filter loop operative to filter at least part of the jitter, and a second 3rd order PLL filter loop operative to drive a decoder clock signal in response to a clock signal extracted from the transport stream.

Still further in accordance with a preferred embodiment of the present invention the decoder includes a system demultiplexer operative to demultiplex the transport stream to produce the at least one video stream, the at least one data stream, and the at least one audio stream.

Additionally in accordance with a preferred embodiment of the present invention the decoder includes a video decoder block operative to decompression modify the at least one video stream.

Moreover in accordance with a preferred embodiment of the present invention the video decoder block includes a MPEG-2 compatible video decoder.

Further in accordance with a preferred embodiment of the present invention the video decoder block includes a lossless/near lossless video decoder.

Still further in accordance with a preferred embodiment of the present invention at least one of the video module and the data and audio module includes a decoder operative to decompression modify at least one of the following the at least one video stream, the at least one data stream, and the at least one audio stream, and the decoder includes a system demultiplexer operative to demultiplex the transport stream to produce the at least one video stream, the at least one data stream, and the at least one audio stream, and the decoder also includes an ancillary data decoder block operative to decompress the ancillary data elementary stream to generate an ancillary data stream for embedding within the video stream.

Additionally in accordance with a preferred embodiment of the present invention the ancillary data decoder block includes a VBI data decoder.

Moreover in accordance with a preferred embodiment of the present invention the ancillary data decoder block includes an HBI data decoder

Further in accordance with a preferred embodiment of the present invention the decoder includes an audio decoder block operative to decompression modify the one or more audio elementary streams to generate one or more audio streams.

Still further in accordance with a preferred embodiment of the present invention the audio decoder block includes an MPEG-1 compatible audio decoder.

Additionally in accordance with a preferred embodiment of the present invention the at least one audio stream includes at least one AES/EBU stream.

Moreover in accordance with a preferred embodiment of the present invention the at least one video stream includes a dejittered real time viewing rate digital video stream.

Further in accordance with a preferred embodiment of the present invention the at least one video stream includes a composite analog video signal.

There is also provided in accordance with another preferred embodiment of the present invention apparatus for lossless/near lossless compression encoding of a video stream for transmission over an ATM WAN, the apparatus including an encoder block operative to encode the video stream by applying at least one compression mode thereto, thereby generating a transport stream, a decision block operative to determine a decision NEAR parameter based, at least in part, on lossless compression data received from the encoder block, the NEAR parameter being used to determine an appropriate near lossless mode, and a control block, communicating with the encoder block and the decision block and operative to determine an appropriate content of the transport stream.

Further in accordance with a preferred embodiment of the present invention the compression data includes lossless compression statistics including a size of the compressed stream, and compression algorithm statistics.

Still further in accordance with a preferred embodiment of the present invention the NEAR parameter is determined based, at least in part, on a predefined set of valid NEAR values.

Additionally in accordance with a preferred embodiment of the present invention the predefined set of valid NEAR values includes at least one discrete functions defined within a prescribed range.

Moreover in accordance with a preferred embodiment of the present invention the predefined set of valid NEAR values includes a continuous function defined within a prescribed range.

Further in accordance with a preferred embodiment of the present invention the video stream. includes a real time viewing rate video stream.

Still further in accordance with a preferred embodiment of the present invention the NEAR parameter is determined for each individual video frame of the video stream.

Additionally in accordance with a preferred embodiment of the present invention the apparatus also includes a parser operative to separate the video stream into separate video components.

Moreover in accordance with a preferred embodiment of the present invention the separate video components include YCbCr components including a Y component, a Cb component, and a Cr component.

Further in accordance with a preferred embodiment of the present invention the transport stream includes a Y component originating from at least one of the following compression sources a lossless compression source, a near lossless compression source, and a clear channel compression source, and Cb and Cr components both originating from a similar compression source, the compression source of the Cb and Cr components being different from the compression source of the Y component.

Still further in accordance with a preferred embodiment of the present invention the Y, Cb, and Cr components originate from a single compression source.

There is also provided in accordance with another preferred embodiment of the present invention apparatus for lossless/near lossless decompression decoding of a transport stream transmitted over an ATM WAN, the apparatus including a decoder block operative to decode the transport stream by applying one or more decompression modes thereto, thereby generating a video stream, and a decision block operative to determine a set of appropriate parameters to be applied by the decoder block for the decompression of the transport stream based, at least in part, on a decision NEAR parameter employed in the compression of the transport stream.

Further in accordance with a preferred embodiment of the present invention the transport stream includes a real time viewing rate stream.

Still further in accordance with a preferred embodiment of the present invention the video stream includes a real time viewing rate stream.

Additionally in accordance with a preferred embodiment of the present invention the apparatus also includes a parser operative to separate the transport stream into a plurality of separate compressed video components.

Moreover in accordance with a preferred embodiment of the present invention the separate compressed video components include YCbCr components.

Further in accordance with a preferred embodiment of the present invention the compressed video components originate from different compression mode sources.

There is also provided in accordance with another preferred embodiment of the present invention apparatus for video ancillary data communication over an ATM WAN, the apparatus including a processor operative to modify at least a part of at least one ancillary data component of an ancillary data stream embedded within a video stream, and at least one memory device communicating with the processor and operative to store a representation of the ancillary data stream including a representation of a full content of the ancillary data embedded within the video stream, and a representation of an ancillary data elementary stream including a content of the ancillary data embedded within the video stream.

Further in accordance with a preferred embodiment of the present invention the processor includes a compression modifier operative to compress at least part of the ancillary data to generate the ancillary data elementary stream for communication over the ATM WAN.

Still further in accordance with a preferred embodiment of the present invention the processor includes a decompression modifier operative to decompress a compressed part of the ancillary data elementary stream to generate an ancillary data stream for embedding in the video stream.

Additionally in accordance with a preferred embodiment of the present invention the ancillary data stream includes VBI data embedded within the video stream.

Moreover in accordance with a preferred embodiment of the present invention the ancillary data stream includes HBI data embedded within the video stream.

Further in accordance with a preferred embodiment of the present invention the compression modifier compresses the ancillary data at a compression rate such that the total ancillary data transmitted does not exceed approximately 1.92 Mbps.

There is also provided in accordance with another preferred embodiment of the present invention apparatus for the communication of dejittered real time viewing rate video over an ATM WAN, the apparatus including a dejittering block operative to filter at least part of a jitter present in a transport stream transmitted over the ATM WAN, the transport stream corresponding to the real time viewing rate video stream, the dejittering block being further operative to extract a clock rate of a corresponding transmitting source embedded in the transport stream, and an STC block operative to generate an STC drive a decoder STC in response to the clock rate of the transmitting source, as extracted by the dejittering block.

Further in accordance with a preferred embodiment of the present invention the clock rate of the transmitting source includes PCR values embedded in the transport stream.

Further in accordance with a preferred embodiment of the present invention the apparatus also includes a demultiplexer operative to demultiplex the dejittered transport stream generated by the dejittering block into corresponding elementary streams for further decompression in accordance with the STC generated by the STC block.

Still further in accordance with a preferred embodiment of the present invention the dejittering block includes a decimation block operative to transform the transport stream into TS packets prior to dejittering.

Additionally in accordance with a preferred embodiment of the present invention the dejittering block includes a 3rd order PLL filter loop operative to filter at least part of the jitter present in the transport stream.

Moreover in accordance with a preferred embodiment of the present invention the STC block includes a 3rd order PLL filter loop operative to drive the decoder STC in response to the clock rate of the corresponding transmitting source.

Further in accordance with a preferred embodiment of the present invention the decoder STC includes an approximately 27 MHz clock signal.

There is also provided in accordance with another preferred embodiment of the present invention a method for video, audio and data communication via an ATM WAN, the method including providing a video service module for modifying at least one video stream, providing a data and audio services module for modifying at least one data stream and at least one audio stream, and providing a network interface module for transmitting the modified streams over the ATM WAN.

Further in accordance with a preferred embodiment of the present invention modifying the at least one video stream, the at least one data stream and the at least one audio stream includes compression thereof generating corresponding elementary streams, using an encoder

Still further in accordance with a preferred embodiment of the present invention compression of the at least one video stream includes compression thereof applying a MPEG-2 video signal encoding mode.

Additionally in accordance with a preferred embodiment of the present invention compression of the at least one video stream includes compression thereof applying a lossless/near lossless encoding mode.

Moreover in accordance with a preferred embodiment of the present invention applying the lossless/near lossless encoding mode includes deciding upon a preferred compression mode on a frame basis.

Further in accordance with a preferred embodiment of the present invention compression of the at least one video stream includes compression of at least a part of the ancillary data embedded within the video stream.

Still further in accordance with a preferred embodiment of the present invention compression of the at least a part of the ancillary data includes compression of VBI data embedded within the video stream.

Additionally in accordance with a preferred embodiment of the present invention compression of the at least part of the ancillary data includes compression of HBI data embedded within the video stream.

Moreover in accordance with a preferred embodiment of the present invention compression of the at least one audio stream includes compression thereof by applying an MPEG-1 audio signal encoding mode.

Further in accordance with a preferred embodiment of the present invention compression of the at least one video stream, the at least one data stream and the at least one audio stream includes multiplexing the elementary streams into a transport stream.

Still further in accordance with a preferred embodiment of the present invention compression of the at least one video stream, the at least one data stream and the at least one audio stream includes ATM adaptation of the elementary streams prior to the communication thereof to the network interface module for transmission over the ATM WAN.

Additionally in accordance with a preferred embodiment of the present invention the ATM adaptation includes adaptation using an AAL1 adaptation layer.

Moreover in accordance with a preferred embodiment of the present invention compression of the at least one video stream includes compression of a real time viewing rate video stream.

Further in accordance with a preferred embodiment of the present invention compression of the at least one audio stream includes compression of at least one AES/EBU audio stream.

Still further in accordance with a preferred embodiment of the present invention modifying the at least one video stream, the at least one data stream and the at least one audio stream includes decompression of the corresponding elementary streams constituting the transport stream, using a decoder.

Additionally in accordance with a preferred embodiment of the present invention decompression of the elementary streams includes ATM adaptation of the transport stream received from the network interface module over the ATM WAN.

Further in accordance with a preferred embodiment of the present invention the ATM adaptation includes adaptation using an AAL1 adaptation layer.

Still further in accordance with a preferred embodiment of the present invention the ATM adaptation includes adaptation with FEC.

Additionally in accordance with a preferred embodiment of the present invention the method also includes smoothing a jitter present in the transport stream using a first 3rd order PLL filter loop.

Moreover in accordance with a preferred embodiment of the present invention the method also includes driving a decoder STC, in response to a clock signal extracted from the transport stream, using a second 3 rd order PLL filter loop.

Further in accordance with a preferred embodiment of the present invention the method also includes demultiplexing the transport stream to the various elementary streams.

Still further in accordance with a preferred embodiment of the present invention decompression of the at least one video elementary stream includes decompression thereof applying a MPEG-2 video signal decoding mode

Moreover in accordance with a preferred embodiment of the present invention decompression of the at least one video elementary stream includes decompression thereof by applying a lossless/near lossless decoding mode.

Additionally in accordance with a preferred embodiment of the present invention applying the lossless/near lossless decoding mode includes deciding upon a preferred decompression mode on a frame basis.

Further in accordance with a preferred embodiment of the present invention the decompression of the elementary streams includes decompression of an ancillary data elementary stream generating an elementary data stream embedded within the video stream.

Still further in accordance with a preferred embodiment of the present invention decompression of the ancillary data elementary stream includes decompression of VBI data.

Additionally in accordance with a preferred embodiment of the present invention decompression of the ancillary data elementary stream includes decompression of HBI data.

Moreover in accordance with a preferred embodiment of the present invention decompression of the one or more audio elementary streams includes decompression thereof applying a MPEG-1 audio signal decoding mode.

There is also provided in accordance with another preferred embodiment of the present invention a method for lossless/near lossless compression of a video stream for transmission over an ATM WAN, the method including providing an encoder block for compressing the video stream into a transport stream by applying at least one compression mode, providing a decision block for determining a decision NEAR parameter corresponding to lossless compression data received from the encoder block, the NEAR parameter determining an appropriate near lossless mode, and providing a control block for determining an appropriate content of the transport stream.

Further in accordance with a preferred embodiment of the present invention the decision block also determines the decision NEAR parameter based, at least in part, on lossless compression statistics including a size of the compressed stream and on compression algorithm statistics.

Still further in accordance with a preferred embodiment of the present invention determining the NEAR parameter includes determination thereof in conformance with a predefined set of valid NEAR values.

Additionally in accordance with a preferred embodiment of the present invention determination in conformance with a predefined set of valid NEAR values includes determination in conformance with at least one discrete function defined within a prescribed range.

Moreover in accordance with a preferred embodiment of the present invention determination in conformance with a predefined set of valid NEAR values includes determination in conformance with a continuous function defined within a prescribed range.

Further in accordance with a preferred embodiment of the present invention compressing the video stream includes compressing a real time viewing rate video stream.

Still further in accordance with a preferred embodiment of the present invention determining the NEAR parameter includes determination thereof for each individual frame of the video stream.

Additionally in accordance with a preferred embodiment of the present invention the method also includes providing a parser for separating the video stream into separate video components.

Moreover in accordance with a preferred embodiment of the present invention separating the video stream into separate video components includes separation thereof into YCbCr components.

Further in accordance with a preferred embodiment of the present invention determining an appropriate content of the transport stream includes multiplexing a Y component originating from at least one of a lossless, a near lossless or a clear channel compression source, and CbCr components both originating from a similar compression source different from that of the Y component, to the transport stream.

Further in accordance with a preferred embodiment of the present invention determining an appropriate content of the transport stream includes multiplexing YCbCr components originating from a single compression source to the transport stream.

There is also provided in accordance with another preferred embodiment of the present invention a method for lossless/near lossless decompression of a transport stream transmitted over an ATM WAN, the method including providing a decoder block for decompressing the transport stream into a video stream by applying one or more decompression modes, and providing a decision block for determining a set of appropriate parameters to be applied by the decoder block for the decompression of the transport stream, based, at least in part, on a decision NEAR parameter employed in the compression of the transport stream.

Further in accordance with a preferred embodiment of the present invention decompressing the transport stream into a video stream includes decompression of a real time viewing rate transport stream into a real time viewing rate video stream.

Still further in accordance with a preferred embodiment of the present invention the method also includes providing a parser for separating the transport stream into separate compressed video components.

Additionally in accordance with a preferred embodiment of the present invention separating the transport stream into separate compressed video components includes separation of the transport stream into YCbCr components.

There is also provided in accordance with another preferred embodiment of the present invention a method for video ancillary data communication over an ATM WAN, the method including providing a processor for modifying at least part of at least one ancillary data component of an ancillary data stream embedded within a video stream, providing one or more memory devices communicating with the processor for storing the ancillary data stream, the stored ancillary data stream including a full content of ancillary data embedded within the video stream, and an ancillary data elementary stream including the full content of the ancillary data embedded within the video stream.

Further in accordance with a preferred embodiment of the present invention modifying at least part of at least one ancillary data component includes compression of the at least one ancillary data component, thereby generating the ancillary data elementary stream.

Still further in accordance with a preferred embodiment of the present invention modifying at least part of the at least one ancillary data component includes decompression of the ancillary data elementary stream to generate the ancillary data stream embedded within the video stream.

Additionally in accordance with a preferred embodiment of the present invention modifying the at least part of the at least one ancillary data component includes modifying VBI data embedded within the video stream.

Moreover in accordance with a preferred embodiment of the present invention modifying the at least part of the at least one ancillary data component includes modifying HBI data embedded within the video stream.

Further in accordance with a preferred embodiment of the present invention modifying the at least part of the at least one ancillary data component includes compressing the ancillary data at a compression rate such that a total ancillary data transmission rate does not exceed approximately 1.92 Mbps.

There is also provided in accordance with another preferred embodiment of the present invention a method for the communication of a dejittered real time viewing rate video stream over an ATM WAN, the method including providing a dejittering block for filtering at least part of a jitter present in a transport stream transmitted over the ATM WAN, the transport stream corresponding to the real time viewing rate video stream, and for extracting a clock rate of a corresponding transmitting source embedded in the transport stream, and providing an STC block for producing an STC and driving a decoder STC in response to the clock rate of the transmitting source extracted by the dejittering block.

Further in accordance with a preferred embodiment of the present invention extracting the clock rate of the transmitting source includes extracting PCR values embedded in the transport stream.

Still further in accordance with a preferred embodiment of the present invention the method also includes demultiplexing a dejittered transport stream generated by the dejittering block into corresponding elementary streams for further decompression in accordance with the STC generated by the STC block.

Additionally in accordance with a preferred embodiment of the present invention the method also includes providing a decimation block for transforming the transport stream into TS packets.

Moreover in accordance with a preferred embodiment of the present invention the method also includes providing a first 3rd order PLL filter loop for filtering at least part of the jitter present in the transport stream.

Further in accordance with a preferred embodiment of the present invention the method also includes providing a second 3rd order PLL filter loop for driving the decoder STC in response to the clock rate of the corresponding transmitting source.

Still further in accordance with a preferred embodiment of the present invention the method also includes driving the decoder STC at approximately a 27 MHz clock rate.

### BRIEF DESCRIPTION OF THE DRAWINGS

Examples of embodiments of the present invention will now be described with reference to the drawings in which:
Fig. 1 is a simplified block diagram of a communication system constructed and operative in accordance with a preferred embodiment of the present invention;
Fig. 2 is a simplified block diagram of a preferred implementation of apparatus used in the communication system of Fig. 1;
Figs. 3 is a schematic block diagram showing a preferred implementation of an encoder used in the apparatus of Fig. 2;
Fig. 4 is a schematic block diagram showing a preferred implementation of a decoder used in the apparatus of Fig. 2;
Fig. 5A is a schematic block diagram of a preferred implementation of a video-encoding block used in the encoder of Fig. 3;
Fig. 5B is a schematic illustration of an encoding process flow as preferably performed by the video encoder of Fig. 5A;
Fig. 6A is a simplified block diagram of a preferred implementation of a video-decoding block used in the decoder of Fig. 4;
Fig. 6B is a schematic illustration of a decoding process flow as preferably performed by the video decoder of Fig. 6A;
Fig 7A is a simplified block diagram of a preferred implementation of a transmitting precompressed service card (DVBT) used in the apparatus of Fig. 2;
Fig 7B is a simplified block diagram of a preferred implementation of a receiving precompressed service card (DVBR) used in the apparatus of Fig. 2;
Fig. 8 is a simplified block diagram of a preferred implementation of an ancillary (ANC) data block used in the encoder of Fig 3;
Fig 9 is a simplified block diagram of a preferred implementation of an ancillary (ANC) data block used in the decoder of Fig. 4, and
Fig. 10 is a schematic block diagram of a preferred implementation of a dejitter block used in the decoder of Fig. 4.

### DETAILED DESCRIPTION OF A PREFERRED EMBODIMENT

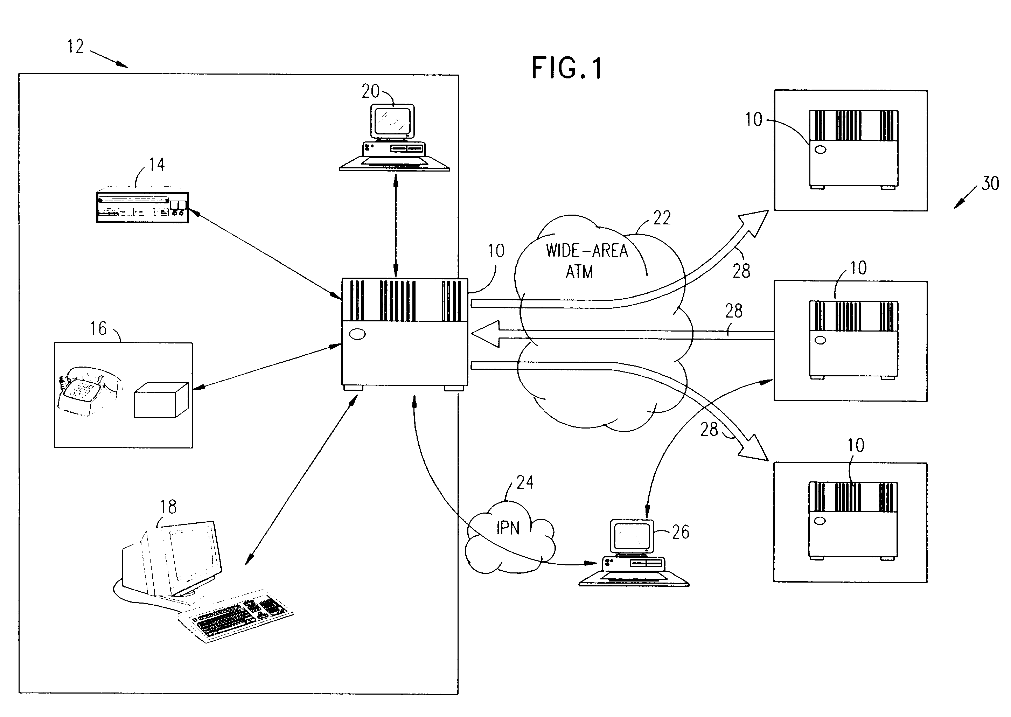

Reference is now made to Fig. 1, which is a simplified block diagram of a communications system constructed and operative in accordance with a preferred embodiment of the present invention. The system of Fig. 1 comprises video communication apparatus 10, herein alternately referred to as Hi-TV 10, which functions as an integrated customer premises equipment (CPE) capable of communicating TV content (video, audio, data) as well as voice and data via a wide area ATM network (ATM WAN) 22.

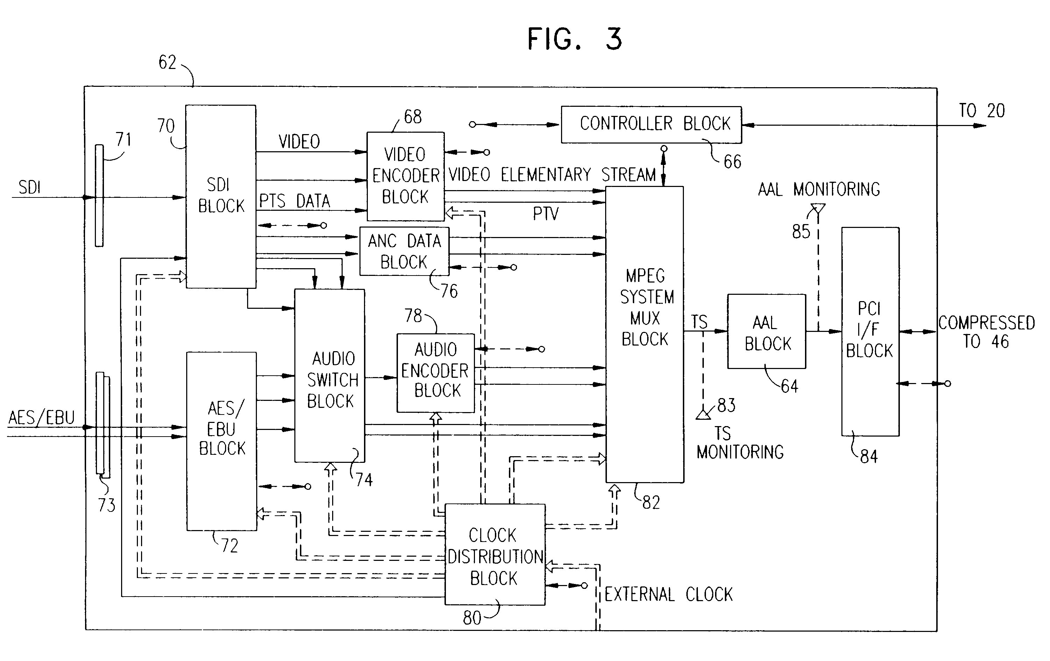

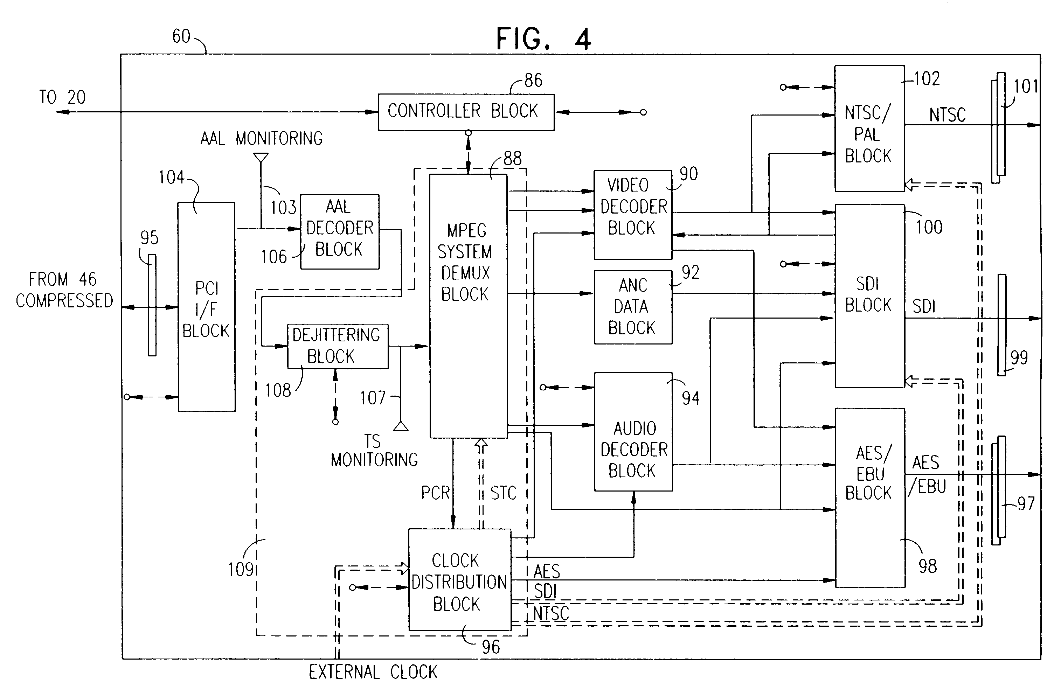

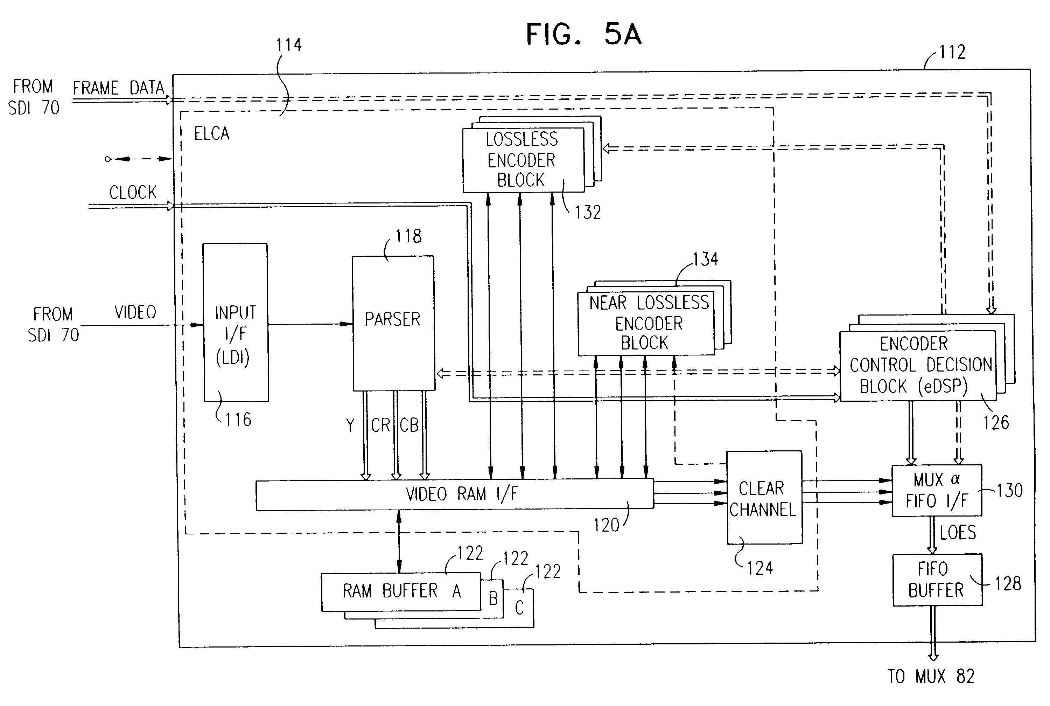

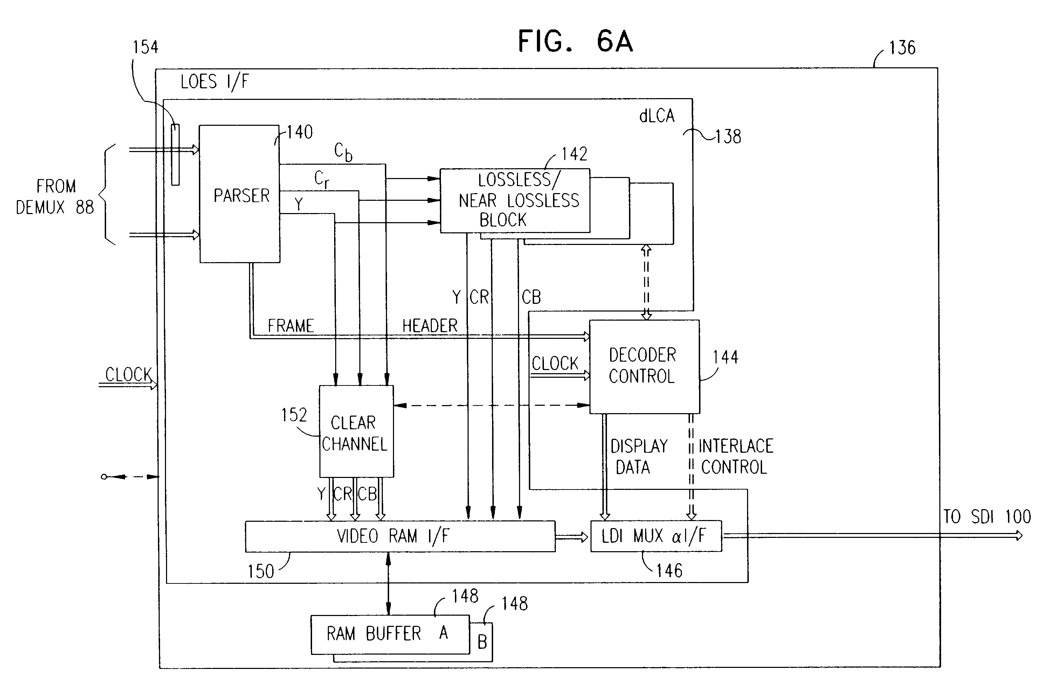

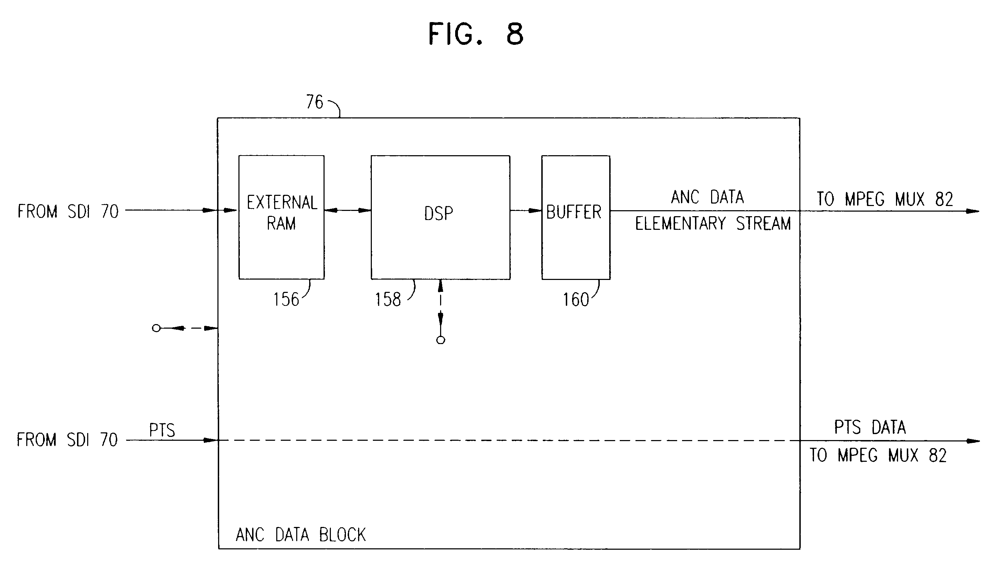

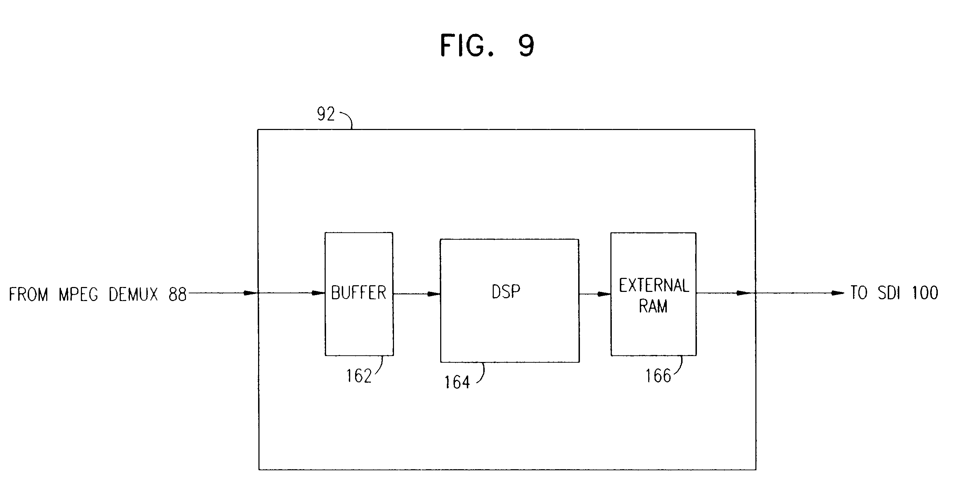

In preferred embodiments of the present invention Hi-TV 10 interfaces with one or more TV source devices 14. In some preferred embodiments of the present invention device 14 comprises a real-time TV I/O device such as a VTR or a video camera. Hi-TV 10 in communication with the real-time TV device handles uncompressed serial digital component video at viewing rate, multichannel AES/EBU audio and ancillary data. Hi-TV 10 typically compresses the video and audio inputs received from device 14 in real-time in accordance with a user-selected quality level, as described hereinbelow with reference to Figs. 3 and 5A. Preferably, Hi-TV 10 also demodulates at least part of the ancillary data received from device 14 such as information signals contained within a vertical blanking interval (VBI) and/or an horizontal blanking interval (HBI), as described in detail with reference to Figs. 8 and 9 below. Alternatively, Hi-TV 10 decompresses and demultiplexes a compressed signal for outputting to device 14, as described in detail with reference to Figs. 4 and 6A below.

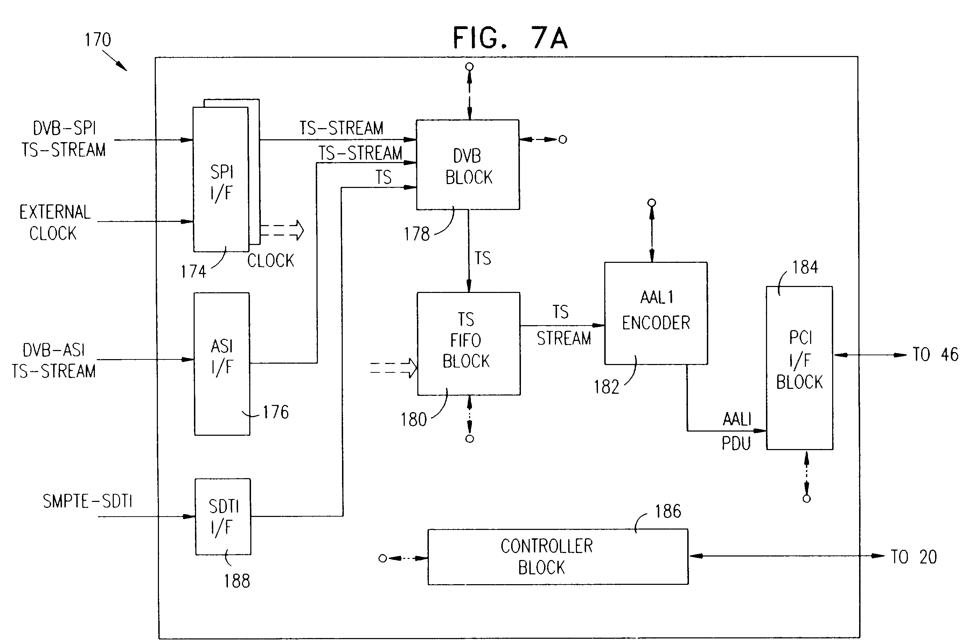

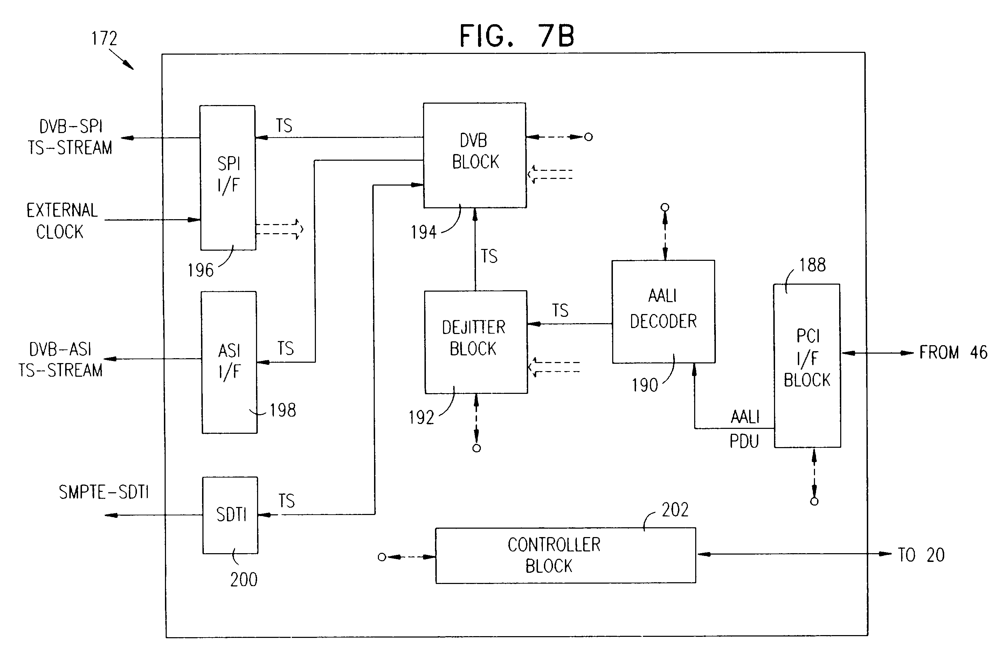

In alternative preferred embodiments of the present invention device 14 comprises a TV I/O device, such as a VTR, a video server or an external codec which inputs and outputs precompressed video at a constant bit rate (CBR) such as, for example, DVB-SPI, DVB-ASI or SDTI Transport Streams. Hi-TV 10 typically transmits the precompressed signal in real-time, as described hereinbelow with reference to Figs 7A and 7B. In some preferred embodiments Hi-TV 10 provides a dejittered real-time or super real-time bitstream for transmission at the far end of a network 22.

Hi-TV 10 is also in communication with a voice and data device 16, which inputs and outputs wideband voice and/or data digital signals Hi-TV 10 in communication with device 16 supports a voice and data circuit emulation service for transmission of synchronous bi-directional voice and data traffic T1E1 circuits typically interface with device 16 for synchronous wideband service. A user may select between an unstructured T1/E1 and a structured T1/E1 service.

Additionally, Hi-TV 10 typically supports a narrowband data service that provides clear channel transport of bi-directional RS-422 circuits. The RS-242 interface preferably connects Hi-TV 10 with a control device 18 providing for control of a remote machine such as, for example, a VTR, a camera, or another suitable remote machine.

Alternatively, device 16 may comprise a workstation or a videodisk, which inputs and outputs precompressed video files. The precompressed TV-files are transferred by Hi-TV 10 on a non-real-time file transfer basis via network 22.

Hi-TV 10 communicates with a system controller 20 such as a Pentium(R)-based PC platform. System controller 20 provides for various system management and control functions such as, monitoring, troubleshooting and configuring Hi-TV 10 and statistics. It also enables downloading of software and gathering of accounting and performance data and interfacing to network management systems and applications such as billing.

In preferred embodiments of the present invention, Hi-TV 10 located on the premises of a subscriber 12 interfaces with network 22 via one or more access lines 28 which typically support 34, 45 or 155 Mbps in each direction, such as DS-3/E-3 or OC-3/STM-1 lines. The bandwidth of lines 28 is typically sufficient to be shared between up to 11 outgoing and incoming TV streams.

Hi-TV 10 at subscriber 12 is connectable with one or more remote subscribers 30, each equipped with a similar Hi-TV 10. A service provider management terminal 26 is typically provided for communication with Hi-TV 10 at subscriber 12 and/or at remote subscriber 30. Terminal 26 may communicate via an IP network 24, such as a PSTN network or equivalents.

Hi-TV 10 preferably supports a range of user services in one integrated, uniform product, thus negating the need for separate codecs and TV equipment interfaces. Hi-TV 10 preferably performs the following multiplexing functions, thus negating the need for separate multiplexers: multiplexing of the video, audio and data which constitute a single TV program into an MPEG-2 Transport Stream (TS); and ATM multiplexing of all the communications services onto the bi-directional access link to the WAN.

Hi-TV 10 preferably functions as a full-function ATM network terminal, thus negating the need for a separate such device. It can be used with broadband PDH/SDH/SONET leased lines and networks, and ATM PVC and SVC networks. A significant advantage of Hi-TV 10 is evident when network 22 is a wide area ATM SVC network. In this case, Hi-TV 10's signaling capabilities enable subscriber-to-subscriber dial-up connectivity with bandwidth on demand.

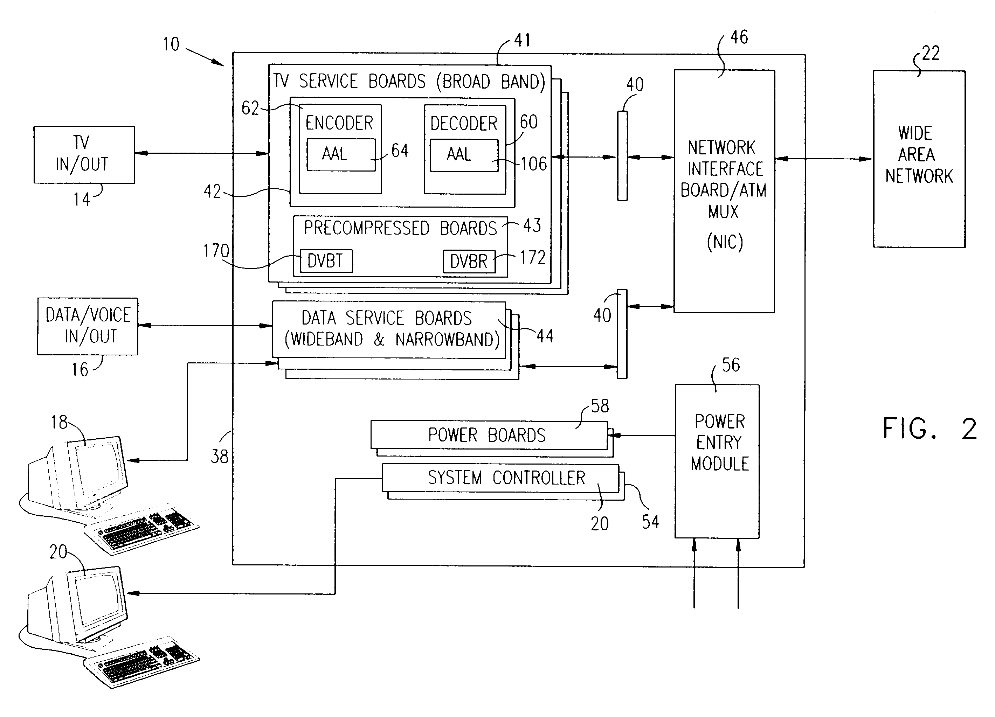

Reference is now made to Fig. 2, which is a schematic block diagram of a preferred implementation of Hi-TV 10 of Fig. 1. The apparatus of Fig. 2 comprises a chassis 38 and a back-plane 40 capable of receiving one or more plug-in modules such as TV service boards 41, data service boards 44 and a network interface board (NIC) 46. TV service boards 41 preferably communicate with TV source device 14. Data service boards 44 preferably communicate with voice and data device 16 and remote machine controller 18.

In some preferred embodiments of the present invention, particularly including embodiments suitable for use with DVB, TV service boards 41 comprise uncompressed signal TV service boards 42 and precompressed signal service boards 43

In preferred embodiments of the present invention an encoder 62, also referred to herein as MPGE 62, receives, compresses and multiplexes the uncompressed video signal from video device 14 as described in detail with reference to Fig. 3 below. A compressed TS is input to an appropriate ATM adaptation layer (AAL) 64 included in MPGE 62. The preferred inclusion of AAL 64 on MPGE card 62, which is one of the novel elements of the present system, provides for separation between the MPEG services, the ATM adaptation functions and the interfacing functions of the system. This separation enhances system capabilities due to the use of novel adaptation means and expansion of NIC 46 functionality.

MPGE 62 located on the premises of a first subscriber such as, for example, subscriber 12, outputs an AAL1 PDU, which is conveyed via NIC 46 to network 22. A decoder 60, also referred to herein as MPGD 60, located on the premises of a second subscriber such as, for example, subscriber 30, receives the AAL1 PDU via network 22. The received AAL1 PDU is preferably used by MPGD 60 to generate video, audio and data signals, which are conveyed to video device 14 of local subscriber 30, for real-time viewing or storing as described with reference to Fig. 4 below.

In further preferred embodiments of the present invention a DVB transmitter 170, also referred to herein as DVBT 170, receives the precompressed DVB stream from device 14 and transmits it over network 22 as described in more detail with reference to Fig. 7A below. A DVB receiver 172, also referred to herein as DVBR 172, typically located on the premises of subscriber 30 receives the transmitted stream. The transmitted stream is typically employed to generate video signals conveyed to device 14, for real-time viewing as described hereinbelow with reference to Fig. 7B.

Hi-TV 10 preferably supports real-time TV transmission at various user selectable MPEG-2 video compression levels. Hi-TV 10 also preferably supports, per user selection at service set up, Forward Error Correction (FEC) codes using Reed-Solomon (124/128) encoding with long interleaving, as is well-known in the art.

NIC 46 preferably interfaces with network 22 over a bi-directional access link. NIC 46 preferably reads the output streams of TV service boards 42 and data service boards 44 and multiplexes them into an ATM virtual connection that has previously been set up in network 22. NIC 46 also preferably receives a multiplexed stream input from network 22, demultiplexes the received multiplexed stream and dispatches each of the resulting separate streams to service boards 42 and 44, respectively.

Preferably, NIC 46 centrally performs functions such as ATM UNI signaling and traffic shaping. NIC 46 typically supports, in collaboration with software residing on system controller 20, ILMI MIBs, OAM cell flows, and the various data flows in SONET and SDH networks. NIC 46 also preferably supports the following I/O boards (not shown): a DS-3 board supporting both PLCP and direct (HEC-based) ATM mapping; and a 155 Mbps board supporting OC-3, STM-1 and OC-12/STM-4. Alternatively or additionally NIC 46 supports a PDH network and I/O boards supporting E3.

A system controller interface board 54 supporting a 10/100 Base-T port and two serial RS-232 COM ports is preferably operable to connect system controller 20 with Simple Network Management Protocol (SNMP) managers (not shown). A power entry module 56 is preferably connected with up to two redundant 48V DC power input sources. The power entry module distributes the power to power supply boards 58 Each power supply board 58 typically has a primary voltage of 48V/60V DC, received from power entry module 56. Power consumption is typically 60 to 250 W (depending on configuration). One power supply board 58 preferably supports full operation.

A test and monitoring module (not shown) may support various test and monitoring functions, including "dry contacts" for alarm monitoring. A fan tray module (not shown) may contain four fans, where any three preferably suffice for the system's cooling requirements

Hi-TV 10 may be configured for a specific purpose by equipping it with a suitable mix of types and quantities of plug-in boards, as is well-known in the art. Boards can preferably be added and swapped in the field, with Hi-TV 10 automatically adapting itself to configuration changes.

Reference is now made to Fig. 3, which is a schematic block diagram representation of a preferred implementation of MPGE 62 of Fig. 2. MPGE 62 is preferably in communication with system controller 20 to enable card control and direct software download.

In Figs 3, 4, 5A, 6A, 7A, 7B, 8, and 10 single dashed arrows are used to indicate a control channel, while double dashed arrows are used to indicate clock distribution.

MPGE 62 receives a video source signal through a serial digital interlace (SDI) 71 typically comprising a 75 BNC connector as a physical interface. MPGE 62 typically comprises one SDI 71.

In preferred embodiments of the present invention, SDI 71 is used to convey one video service (referred to as SDI stream), in accordance with ANSI/SMPTE 259M ITU-R BT.656-3, supporting both 525 and 625 lines. In addition SDI 71 conveys up to two embedded audio services in accordance with ANSI/SMPTE 272M and an elementary stream comprising up to 1.92 Mbps of VBI ancillary data. Alternatively, SDI 71 also supports horizontal blanking interval (HBI) ancillary data in accordance with ANSI/SMPTE 291M.

The SDI stream received via SDI 71 is preferably input to a SDI block 70, which demultiplexes services comprised in the SDI stream. For example, the SDI stream may be demultiplexed into four services comprising a first service, a second service, a third service, and a fourth service. The first service typically comprises at least one digital video channel input in YCbCr format, 16 bit mode at 13.5 MHz to a video encoder block 68. The second service typically comprises up to two audio streams, which are input in 32-bit format at 6 75 MHz to an audio switch block 74. The third and the fourth services typically include up to two audio auxiliary data streams, input to audio switch block 74, and at least one ancillary data stream, typically comprising VBI data, input in 16 bit Y only format at 27 MHz to an ANC data block 76.

SDI block 70 is typically responsible for sampling video and ancillary data PTS values for inputting to video encoder block 68 and ANC data block 76, respectively. SDI block 70 also typically receives a 27 MHz clock signal from a clock distribution block 80 for generating audio, video and ancillary data framing signals for inputting to audio switch block 74, video encoder block 68 and ANC data block 76, respectively.

SDI block 70 typically extracts a 27 MHz clock signal from the SDI stream for input to clock distribution block 80 as a possible clock source. SDI block 70 is typically connected to a controller block 66 via a control channel.

In preferred embodiments of the present invention SDI block 70 comprises four basic elements:
- a suitable chip set, as known in the art, is typically employed for the recovery of the input data and for serial to parallel conversion. An extraction block preferably extracts the AES/EBU streams, checks the EDH and generates video-timing signals.
- a self-designed FPGA provides for a video stream conforming to the format required by video encoder 68. The FPGA provides for writing at least part of the SDI ancillary data, typically comprising VBI lines, and EDH flags to an ancillary RAM and interfacing to ANC data block 76 and controller block 66. Optionally, the FPGA may also have preprocessing and ancillary data extracting capabilities, such as asynchronous ancillary data extraction.
- a pattern generator based on a frame buffer and controlled by the FPGA typically generates a SDI test pattern
- an SDI circuit comprising an equalizer circuit and a clock recovery circuit typically extracts the clock signal from the incoming SDI stream , converts the data stream to PECL levels and detects a Loss of Signal (LOS) situation.

At least two AES/EBU I/Fs 73 are typically mounted onto MPEG 62. Each AES/EBU l/F 73 is typically used to convey one stereo audio service sampled at 48 kHz which may also include AES/EBU auxiliary data, in accordance with EBU specification Tech. 3520-E/lEC 958, from device 14.

In preferred embodiments of the present invention, an AES/EBU block 72 receives up to two audio signals, each containing audio samples and audio auxiliary data from AES/EBU I/Fs 73. The block demultiplexes each signal into separate audio samples and audio auxiliary data streams input to audio switch block 74.

AES/EBU block 72 typically receives a 12.288 MHz clock signal from clock distribution block 80. Additionally or alternatively, AES/EBU block 72 may extract a 12.288 MHz clock signal from each of the audio source streams for input to clock distribution block 80 as possible clock sources.

AES/EBU block 72 is preferably connected to controller block 66 via a control channel.

Preferably, AES/EBU block 72 is based on a Digital Audio Interface Receiver chip, as known in the art, and a custom FPGA, also termed herein a self designed FPGA. The primary task of the FPGA typically comprises handling those cases in which the input AES/EBU is not synchronized to the internal (27 MHz) clock signal.

AES/EBU block 72 further preferably comprises a RS-422 line receiver and a phase-locked-loop (PLL) (not shown), as are well-known in the art, for recovering the clock and synchronization signals.

Audio switch block 74 typically receives the audio and auxiliary data streams from SDI block 70, typically in a proprietary format, and the streams from AES/EBU block 72 in a 4 bytes per sample format at 96 kHz and 3.072 Mbps. The audio switch block 74 is responsible for choosing the source of each of the two pairs of the audio and auxiliary data streams incorporated within the MPEG TS.

The audio samples of the selected pairs are input to an audio encoder block 78 and the associated auxiliary data stream is input to an MPEG system mux block 82. The audio samples and the auxiliary data stream are each typically accompanied by framing signals received from the respective signal source and switched with the traffic.

Audio switch block 74 is also responsible for sampling the PTS values for each audio and auxiliary data stream and passing the PTS values to audio encoder block is and MPEG system mux block 82, respectively. Audio switch block 74 is typically based on a custom FPGA design with a suitable FIFO chip, as known in the art, for each channel.

Audio encoder block 78, which is preferably capable of simultaneous handling of up to two stereo audio channels, typically supports both a compressed and an uncompressed mode. In the compressed mode audio encoder block 78 preferably performs audio encoding using a MPEG-1 layer 2 (MUSICAM) algorithm.

Audio encoder block 78 typically receives two streams of audio samples and their associated PTS values from audio switch block 74 Each stream is independently compressed or transparently transferred.

The compressed mode input streams are typically 20 bits per sample at 48 kHz at 1.92 Mbps. The uncompressed mode input streams are typically 20/24 bits per sample: 48 kHz at 1.92 Mbps at 20 bits; or 2.304 Mbps at 24 bits. The compressed mode output streams may typically comprise 1 mono, 2 mono, or 2 joint stereo streams at up to 192 Kbps/channel. In the uncompressed mode the output may typically comprise 1 mono or 2 mono, typically packed into 32 bits words.

The two resulting streams, which are audio, Elementary Streams (ES) are preferably sent with their PTS values to MPEG system mux block 82.

Audio encoder 78 is preferably responsible for maintaining the association between each compressed frame and its sampled PTS value Audio encoder 78 preferably receives a 12.288 MHz clock signal from clock distribution block 80 and is preferably in communication with controller block 66.

Video encoder block 68 receives the video signal, the video framing signals and the PTS value for each frame from SDI block 70. The video encoder block 68 preferably compresses the video and produces an ES of MPEG-2 video signal input to MPEG system mux block 82 along with the PTV value.

It is typically the responsibility of video encoder block 68 to maintain the association between each compressed frame and its PTV value. The block preferably receives a clock signal from clock distribution block 80 and is connected to controller block 66.

Preferably, video encoder block 68 supports various user selectable compression modes typically including one or more of the following: MPEG-2 4:2:2; Profile @ ML; and MP @ ML.

MPEG-2 4:2:2 mode, as is well-known in the art, typically provides very high TV quality, enabling subsequent editing of the material and multiple generations of compression. MPEG-2 4:2:2 typically retains full 4:2:2 video resolution during compression, and operates at up to 50 Mbps

MPEG-2 4:2:0, as is well-known in the art, is suitable for consumer viewing and typically decreases video resolution to 4:2:0 during compression, and typically operates at up to 15 Mbps.

In preferred embodiments of the present invention, video encoder block 68 is based on an IBM chip set for MPEG-2 video encoding, such as 75H1323 comprising one IBM I chip (MPEGSE10), one IBM R chip (MPEGSE20) and one IBM S chip (MPEGSE30) and appropriate RAMs connected thereto.

A frame buffer in FIFO mode is preferably used for storing a compressed frame at the output of the video encoder block 68. The frame buffer may be designed based on a buffer RAM, as is well-known in the art.

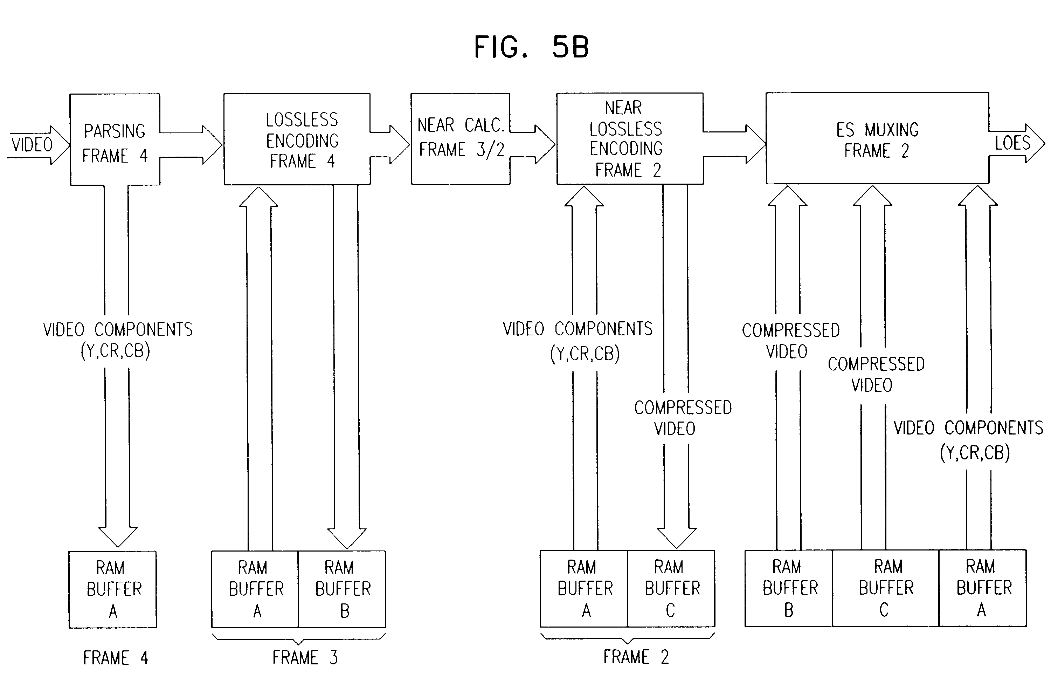

In other preferred embodiments of the present invention, the video encoder block comprises a lossless compression ASIC (LCA) and an appropriate DSP providing for a novel lossless and near-lossless compression with decision control, the configuration and operation whereof are described below in more detail with reference to Figs. 5A and 5B.

Ancillary data embedded in the ancillary space of the TV stream such as, for example, Vertical Interval Time Code (VITC), Teletext and Closed Captioning contained in the VBI, is preferably extracted by SDI block 70 from the video stream and received by ANC data block 76 along with the PTS value for each frame.

In addition, Hi-TV 10 preferably supports SDI Error Detection and Handling standard SMPTE RP 165, which is well-known in the art, including setting and resetting error flags and generating EDH check-words on the output SDI stream.

The ancillary data referred to above, including the EDH word, is transmitted from ANC data block 76 to MPEG system mux 82. The ANC data block is typically responsible for keeping full synchronization between the ancillary data and the video frames it originates from during transmission.

In a preferred embodiment of the present invention, described in more detail with reference to Fig. 8 below, part of the VBI data is preferably extracted as original information bits and compressed while the remaining information is transferred as is, such that the maximal transmission rate does not exceed a predefined limit, typically 1.92 Mbps.

MPEG system mux block 82 is preferably responsible for multiplexing a TV program in accordance with MPEG systems standards, as for example, the MPEG-2 system.

The TV program multiplexed by the MPEG system mux block 82 may include up to six different services. Preferably, MPEG system mux block 82 receives one video ES from video encoder block 68 along with its associated PTS and up to two audio ESs from audio encoder block 78 with their associated PTSs MPEG system mux block 82 further typically receives up to two auxiliary data ESs and their associated PTSs from audio switch block 74; and an ES of ancillary data carrying up to 1.92 Mbps of ancillary data units and its associated PTS.

Preferably, MPEG Mux 82 supports a variable bit rate (VBR) or a constant bit rate (CBR) video input and a constant bit rate (CBR) input for the remaining services Accordingly, MPEG Mux 82 preferably compnses two input buffers - one for the video and the second for the remaining services.

The MPEG system mux block multiplexes the video and the remaining services, the multiplex thus produced typically comprising a packetized TS in accordance with MPEG-2. The packetized TS is preferably input to AAL block 64 in CBR mode. Each resultant TS packet comprising 188-bytes is typically transmitted according to a fixed transmission schedule, typically once every n clock cycles, with n being fixed for each session and each cycle being derived from a 27 MHz clock. Typically, the clock is triggered by clock distribution block 80, thereby achieving the CBR mode.

In addition, MPEG system mux block 82 provides for sampling a system time clock (STC) value from clock distribution block 80 and constructing the PCR information to be transmitted to a corresponding terminal.

MPEG system mux block 82 is also typically responsible for constructing the packetized ESs from the input ESs and attaching a PTS thereto, and for constructing program tables required by a corresponding MPEG System demultiplexer. MPEG system mux block 82 typically receives a 27 MHz clock signal from Clock block 80.

In preferred embodiments of the present invention, MPEG system mux block 82 comprises a DSP (not shown), hereinbelow referred to as DSP_MUX, as is well-known in the art, which performs the multiplexing function and the CBR maintenance. A self designed FPGA converts the streams from the different sources to conform with the DSP_MUX.

AAL block 64, which preferably comprises an AAL1 layer type, typically receives 188-bytes TS packets from MPEG system mux block 82 and outputs ATM cells to PCI block 84. The AAL block 64 preferably supports both transparent and forward error correction (FEC) processing with long interleaving.

If FEC is not incorporated the AAL block 64 preferably reassembles the input bytes into 47-byte SAR-PDUs and adds a 1 byte SAR-PDU header. If FEC is incorporated the input bytes typically fill the lines of an interleaving matrix of 47 columns and 124 lines. The AAL block 64 performs forward error correction by adding 4 columns to the matrix (4 bytes to each line of 124 bytes) and adds the 1 byte SAR-PDU header to each line to construct the AAL1 PDU. Columns of 48-bytes each containing the AAL1 SAR-PDUs are removed from the matrix and sent to PCI I/F 84. The 188-bytes TS packets are aligned to the 47-bytes AAL1 PDUs.

In preferred embodiments of the present invention, AAL block 64 is based on a Video Error Processor, as known in the art. The processor is associated with an external synchronous FIFO buffer, as known in the art, operating as a data source.

An FPGA logic element (not shown) comprised in AAL block 64 manages the data flow and controller communication The FPGA element is also responsible for adjusting the TS and AAL payloads for outputting as monitoring l/Fs 83 and 85, respectively.

TS monitoring l/F 83 and AAL monitoring l/F 85 enable loop-back monitoring of a TV program transmitted from MPGE card 62 as well as recording of the data at the AAL or TS layers.

TS monitoring I/F 83 preferably comprises a 9 MHz 10 pin connector, as is well-known in the art. Connecting two such connectors, each located on MPGE card 62 and MPGD card 60 of same Hi-TV 10, respectively, enables the TS packets generated by MPGE card 62 to be received by the local MPGD card 60 for monitoring.

AAL monitoring I/F 85 preferably comprises a 10 pin connector, as is well-known in the art. Connecting two such connectors, each located on MPGE 62 and MPGD 60 of same Hi-TV 10, respectively, enables the AAL PDUs generated by MPGE 62 to be received by the local MPGD 60 for monitoring.

PCI I/F block 84 is the card front-end to a PCI I/F operating as a slave device on a PCI bus, with NIC 46 (Fig. 2) operating as a master PCI I/F block 84 receives AAL1 PDUs from AAL block 64 and sends them to the PCI bus towards NIC 46

In preferred embodiments of the present invention, the design of PCI block 84 is typically based on a FPGA design including a standard PCI target core and a 32K Word RAM.

In preferred embodiments of the present invention, the control functionality of MPGE 62, described herein as being carried out by controller block 66, is handled by the DSP_MUX. The communication with the different blocks is preferably performed using a register mapped method. The VBI data DSP is an exception, as the controlling channel thereto is typically provided via a serial port with the DSP_MUX being the master.

Clock distribution block 80 is clock generator for the MPGE card 62. The clock distribution block 80 maintains a 27 MHz stabilized PLL (VCXO) that can be derived from various sources, some already mentioned above with reference to the various blocks. The various clock sources may comprise restored sources such as the video source clock restored from SDI block 70 and the audio source clock restored from AES/EBU block 72. Additionally, possible clock sources may include, for example: a system external clock; and an open loop or free running clock.

The 27 MHz clock is used to increment the value of the STC which provides PTS and PCR values to the various blocks of the MPGE card in accordance with the MPEG-2 system specifications.

Accordingly, clock distribution block 80 generates and distributes six distinct clock signals. A Program Clock Reference (PCR. 42 bit, 27 MHz counter) is input to MPEG system mux block 82 and Presentation Time Stamps (PTS. 33 bit 90 kHz counter) are sent to SDI block 70 and audio switch block 74. In addition, a 27 MHz clock signal is input to SDI block 70 and a 12.288 MHz clock signal is sent to both AES/EBU block 72 and audio encoder block 78. A trigger for the release of a TS packet is input to MPEG system mux block 82 and a 6.75 MHz clock and video framing signals are sent to an external clock interface.

Reference is now made to Fig. 4, which is a schematic illustration of a preferred implementation of the MPGD 60 of Fig. 2. MPGD 60 preferably receives AAL1 SAR-PDUs. carrying a TV program, multiplexed to a MPEG TS, originated from a remote Hi-TV 10. Optionally, the MPEG TS originates from local MPGE 62 in loop-back mode or from remote DVBT board 170.

MPGD 60 preferably generates video, audio and data signals towards the local user over a SDI I/F 99, a NTSC/PAL I/F 101 and an AES/EBU I/F 97. MPGD 60 also preferably supports full EDH functionality on the outgoing SDI signal using the EDH flags passed over the ancillary data ES. MPGD 60 preferably exchanges control and maintenance information with system controller 20.

In alternative preferred embodiments of the present invention, MPGD 60 also preferably supports a CD21 16 bit audio mode, this function utilizing a dedicated audio output port of a MPEG demux block 88 and audio decoding capabilities of a video decoder block 90.

A PCI l/F block 104, preferably operative as the card front-end of a PCI bus l/F 95, provides a high-speed unidirectional connection supporting the transmission of AAL1 SAR-PDUs from NIC 46 to MPGD 60. PCI l/F block 104 operates as a slave device on the terminal (Hi-TV 10) PCI bus.

PCI l/F block 104 preferably receives PCI bursts containing AAL1 PDUs from NIC 46 and sends them towards AAL decoder block 106. In loop-back monitoring PCI I/F block 104 preferably captures AAL1 PDUs sent from local MPGE 62 to NIC 46. PCI I/F block 104 communicates with a controller block 86 over a control channel.

AAL Decoder block 106 typically receives 48-byte AAL1 SAR-PDUs from PCI I/F block 104 in normal mode and from an AAL Monitoring I/F 103 in loop-back mode.

In a case where FEC is implemented AAL block 106 preferably accumulates 128 SAR-PDUs. and performs error correction by extracting the SAR-PDU header, checking each SAR-PDU's sequence number and correcting byte errors whenever necessary. The AAL block 106 then preferably sends corrected interleaved 124-bytes blocks to a dejitter block 108.

When FEC is not implemented AAL block 106 preferably extracts the SAR-PDU header and passes SAR-PDUs 47-bytes blocks to dejittering block 108.

AAL Decoder block 106 is preferably based on an AAL1 processor, as known in the art, such as, for example, a COMATLAS CAS9053 processor.

One of the major issues in transporting high-quality viewing-rate video over any transmission link is timing, since it is an important system requirement to play the received signal at a constant rate, within limits defined by existing standards.

Cells propagating through an ATM network typically experience cell delay variation (CDV), also referred to as jitter, induced by the ATM network, the packetization process in remote Hi-TV 10 (Fig. 1) and the PCI bus. It is the task of dejitter block 108 to smooth this jitter and extract the clock rate used by the transmitting MPGE to drive a local clock distribution block 96 and an output SDI.

Alternatively or additionally, a frame skip or a frame repeat mode or a suitable buffer are employed for gapping cell arrival time variations. Such mechanism are employed whenever a clock locking mode is not needed due to lower video quality demands.

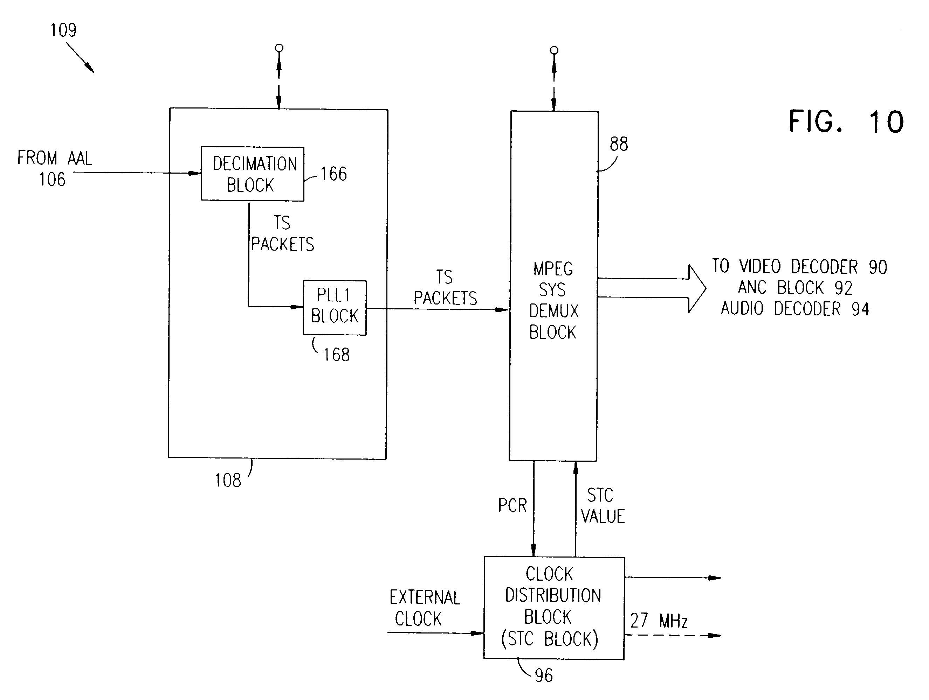

Dejittering block 108, described in more detail with reference to Fig. 10 below, receives interleaved SAR-PDUs typically comprising 124-bytes with FEC, or 47-bytes without FEC, from AAL decoder block 106. The dejittering block 108 preferably minimizes the cell arrival time jitter, using an Adaptive Clock Recovery Method described hereinbelow. It then constructs 188-bytes TS packets sent to a MPEG system demux block 88.

AAL monitoring I/F 103 and a TS monitoring I/F 107 connected at AAL decoder block 106 input and dejittering block 108 output, respectively, are preferably similar to corresponding elements mounted on MPGE 62 and described with reference to Fig. 3 above.

MPEG system demux block 88 preferably aligns to the incoming TS packets and extracts the PCR signals therefrom. The PCRs are input to clock distribution block 96.

MPEG system demux block 88 preferably demultiplexes the MPEG-2 carrying video PES from the TS and transmits the demultiplexed video to video decoder block 90. MPEG system demux block 88 preferably provides for demultiplexing of up to two channels of audio PESs generating audio and audio auxiliary data ESs. The ESs are preferably sent to audio decoder block 94 and the audio auxiliary data ESs are preferably sent to SDI block 100 and AES/EBU block 98.

MPEG system demux block 88 also preferably demultiplexes SDI ancillary data PES carrying multiplexed ancillary data units and overhead with a typical total rate of up to 1.92 Mbps. MPEG system demux block 88 preferably aligns the resultant stream to the video PES according to PTS information and constructs the ancillary data ES sent to ANC data block 92. MPEG system demux block 88 also preferably receives an STC value from clock distribution block 96.

Preferably the MPEG demux 88 is based on a MPEG-2 System Layer Demultiplexer chip, as is well-known in the art, which implements most of the MPEG-2 System Layer Demux functions.

ANC data block 92, described in more detail with respect to Fig. 9 below, preferably receives the ancillary data ES containing ancillary data units which may include compressed VBI data ANC data block 92 typically modulates the baseband data units while the clear, typically uncompressed, channel units pass transparently. After decompression, all ancillary data units are preferably transmitted to SDI block 100.

Audio decoder block 94 preferably receives two ESs of compressed or uncompressed audio samples. The compressed input channels are preferably decompressed while the uncompressed input channels preferably pass the block transparently. The output of audio decoder block 94 typically comprises up to two uncompressed audio ESs sent to AES/EBU block 98 and SDI block 100. Audio decoder 94 typically receives a clock signal, typically a 12.288 MHz clock signal, from clock distribution block 96.

Preferably the audio decoder block is implemented by a DSP, as known in the art. Audio decoder block 94 typically comprises two such DSPs (not shown), one per channel, and their accompanying SRAMs (not shown).

Video decoder block 90 preferably decompresses the received MPEG-2 video stream. In CD21 16 bit audio mode the video decoder block 90 also typically receives a 16 bits/sample audio PES which is preferably decompressed into an ES by video decoder block 90 and sent to AES/EBU block 98.

Video decoder 90 preferably receives a PES of MPEG-2 video from MPEG system demux block 88 and constructs an ES of MPEG-2 video, decompresses the ES, and produces an uncompressed digital video stream. The digital video stream is preferably input to SDI block 100 and to a NTSC/PAL block 102. The video decoder 90 typically receives the STC value from clock distribution block 96 and control data from controller block 86

Preferably, the Video decoder 90 is based on a MPEG-2 video decoder, as is well-known in the art, such as an IBM CD21 MPEG-2 video decoder, or equivalents thereof.

SDI block 100 preferably multiplexes the various services received from video decoder 90, ANC data block 92, audio decoder block 94 and MPEG system demux 88 into a single SDI stream transmitted to the user via SDI I/F 99

SDI block 100 also typically receives a 27 MHz clock signal from clock distribution block 96 and produces video framing signals transmitted to video decoder 90 and NTSC/PAL block 102.

Preferably. SDI block 100 comprises a SDI Mux sub-block based on a self designed FPGA and a Parallel to Serial sub-block.

SDI I/F 99 preferably conveys one video service, in accordance with ANSI/SMPTE 259M, supporting both 525 and 625 lines. It also preferably conveys up to two embedded audio services in accordance with ANSL/SMPTE 272M, and also VBI and, optionally, HBI ancillary data in accordance with ANSI/SMPTE 291M.

AES/EBU block 98 preferably receives two uncompressed audio ESs from audio decoder block 94 and two audio auxiliary data ESs from MPEG system demux block 88. Block 98 preferably multiplexes each audio stream with its associated auxiliary data into an AES/EBU signal. The two AES/EBU signals thus generated are sent to the user preferably over AES/EBU l/Fs 97, typically in accordance with EBU standard Tech. 3250-E, providing the electrical characteristics to the output line.

Alternatively, in CD21 16 bit audio mode AES/EBU block 98 receives one ES of 16 bit audio samples from the audio decoder block 94 and preferably generates one AES/EBU signal sent to the user.

AES/EBU block 98 typically receives a 12.288 MHz clock signal from clock distribution block 96 and communicates with controller block 86.

Each of the two AES/EBU I/Fs 97 is typically used to convey one audio service to the user, each audio service being sampled at 48 kHz, including up to 24 bits per sample, and optionally including AES/EBU auxiliary data, in accordance with EBU specification Tech. 3250-E/IEC 958.

NTSC/PAL block 102 preferably receives a digital video signal from video decoder 90 and video framing signals from SDI block 100. It converts the digital input to an analog video signal in NTSC or PAL format. The analog signal is sent to the user across NTSC/PAL l/F 101, providing the electrical characteristics to the output line

NTSC/PAL block 102 preferably receives a 27 MHz clock signal from clock distribution block 96 and communicates with controller block 86. Preferably, NTSC/PAL block 102 is based on a digital video encoder (DVE), as known in the art.

NTSC/PAL I/F 101 preferably conveys a composite analog video signal in NTSC or PAL format, to the user The viewing format is typically determined according to the digital signal format and the specific NTSC or PAL format is user selectable.

Controller block 86 preferably exchanges information with system controller 20 of Fig. 1 and with the components of MPGD 60, as described above Its general function is to serve as an agent between system controller 20 and all the functional blocks of MPGD 60.

Specific functions of the controller block 86 typically include controlling the Demux chip of MPEG system demux 88 and managing the transfer of the demultiplexed services from the Demux chip of MPEG system demux 88 to the appropriate component on MPGD card 60. The controller block 86 is typically responsible for managing software download processes and managing a Built-in Test (BIT) procedure of the MPGD card.

Furthermore, controller block 86 typically receives session configuration parameters from system controller 20 of Fig. 1 and distributes the pertinent information to each component, at the beginning of the session. It also transfers control information from system controller 20 of Fig. 1 to the MPGD components and status information from each component to system controller 20 of Fig. 1 during a session.

In some preferred embodiments of the present invention, the control functionality of MPGD 60, described above as being carried out by controller block 86, is handled by a DSP handling the TS demux embedded software comprised within MPEG system demux block 88. The communication with the different blocks is typically performed using a memory mapped register structure.

Clock distribution block (STC block) 96 is preferably the MPGD card 60 clock generator and typically maintains a 27 MHz stabilized PLL (VCXO). It may be driven by a 27 MHz clock signal originating from the transmitting Hi-TV 10 (Fig. 1) terminal and restored from the PCR signals received from MPEG Demux block 88 using the Adaptive Clock Recovery method. It may be driven by a common external clock or run in an open loop mode.

Clock distribution block 96 preferably generates and distributes three clock signals. A STC value (33 bit 90 kHz) is input to MPEG system demux 88 and video decoder block 90. A 27 MHz clock signal is sent to SDI block 100 and NTSC/PAL block 102. A 12.288 MHz clock signal is input to AES/EBU block 98 and audio decoder block 94.

In some preferred embodiments of the present invention, the functional clock distribution block is typically implemented in MPEG demux block 88 based on the MPEG-2 System Layer Demultiplexer chip. The MPEG-2 System Layer Demultiplexer chip typically recovers the 27 MHz system clock using the PCRs. The STC values are available in the register set of the AV6220 and can be accessed by controller block 86. The AV6220 also generates the 12.288 MHz audio bit clock signal

Reference is now made to Figs. 5A and 5B. Fig. 5A is a schematic illustration of a preferred implementation of the video encoder block 112 of Fig.3, which preferably performs lossless/near lossless video compression. Fig. 5B schematically illustrates a typical encoding process flow as performed by video encoder block 112 of Fig. 5A.

Both lossless and near lossless compression are preferably performed in accordance with JPEG-LS algorithms. However, since the JPEG-LS is not a rate controlled algorithm it does not support pre-definition of compressed frame size, nor is it capable of predicting an upper limit of a compressed frame In order to allow real-time, network oriented use of the JPEG-LS algorithms, an appropriate rate control mechanism is provided in a preferred embodiment of the present invention, so as to support real-time JPEG-LS compression and CBR mode output

The lossless/near lossless video encoding process may proceed in any one of several modes including, for example, one of the following: parallel; adaptive; double pass; and pipeline modes. Typically, the parameters of the near lossless compression are set externally and input to a near lossless compression device. The parameters may be defined to include a NEAR parameter, which may be pre-assigned or calculated per frame as described below.

In the parallel compression mode, both lossless compression and near lossless compression are preferably performed simultaneously. The NEAR parameter is pre-assigned and the decision regarding the most suitable compression mode is made per frame.

In the adaptive mode the default is typically lossless compression. The type of compression may switch to near lossless mode dependent on the ratio between the number of already encoded bits and a maximal allowable number of bits per encoded frame. Hence, each frame may be transferred either as lossless or near lossless or as a combination thereof.

In the double pass mode a double pass compression is typically performed for reducing the compressed frame size, possibly reducing the need for near lossless compression to a minimum.

In the pipeline mode, as discussed hereinbelow by way of example in describing the configuration and operation of video encoder block 112, the choice between lossless and near lossless compression is made anew for each frame. The NEAR parameter is calculated on a frame basis using the results of the same frame lossless compression.

In preferred embodiments of the present invention, the lossless/near lossless compression is performed by an encoding block of the LCA, referred to herein as eLCA 114, and an encoder control and decision block (eDSP) 126 both constituting part of video encoder block 112.

The eLCA 114 preferably receives the video signal, referred to herein as an LDI stream, via an input l/F (LDI) 116, from SDI block 70 of Fig. 3. Both a gapped input mode, also referred to herein as VBR, and a real time input mode, also referred to herein as CBR, are preferably supported The LDI stream, typically in field mode, is input to a parser 118 which provides for generating a frame by interleaving its two pertaining fields. Preferably, parsing is performed on complete frames only. Alternatively, the parsing may proceed in a field mode

Parser 118 preferably separates the LDI stream into its three separate YCbCr components, storing the three separate components, typically into a RAM buffer A 122 via a Video RAM I/F 120. At the receipt of a new frame, parser 118 preferably, synchronizes the LCA, specifically, for example, the eLCA 114, with the LDI stream and performs a frame integrity check.

Upon synchronization parser 118 preferably extracts VBI, HBI, even field and two YCbCr timing signals. The parser 118 performs a limit check on the LDI stream for determining compliance with Rec 601-3. Optionally, it also performs clipping of the LDI stream to comply with Rec. 601-3.

Parser 118 preferably supports several data manipulations, typically including horizontal and vertical frame chopping and a per-frame changeable field-to-frame conversion. Preferably, the chopped frame's width will not exceed 720 pixels and its maximal height will not exceed 625 lines.

Parser 118 also preferably supports a 3:2 pull down mode aimed at reducing a required service bandwidth upon transmission of repeat images using CRC calculation. A lossless encoder block 132 is preferably responsible for the lossless compression of the three YCbCr video components retrieved from RAM buffer 122A. The compression may proceed in frame or field mode using a set of predefined external parameters and a zero valued NEAR. Typically, the same encoding parameters will be used for both fields of a given frame. The resultant up to six YCbCr compressed streams are preferably stored in a RAM Buffer B 122.

Upon completion of the lossless encoding of a given frame the eDSP 126 calculates the NEAR parameter based on lossless compression statistics comprising the size of all the compressed streams and algorithm statistics.

The eDSP 126 preferably uses the algorithm statistics for classifying the source frame. This classification, in addition to the lossless compressed frame size, is preferably used by the eDSP 126 for predicting the near lossless compressed frame size. The predicted frame size preferably determines the value of the NEAR parameter used by a near lossless encoder block 134 for the near lossless compression.

Preferred embodiments of the present invention typically support a predefined set of valid NEAR values. Preferably, a set of valid NEAR values comprises the range of one or more discrete functions each defined within a certain range by a certain increment. Alternatively, the valid values may be defined by a predefined continuous function.

In a preferred embodiment of the present invention, the set comprises a first function with values ranging from 1 to 6 by an increment of 1, a second function with values ranging between 6 to 8 by an increment of 2; a third function with values ranging between 8 and 24 by an increment of 4; and a fourth singled value function having a value of 32. In accordance with the embodiment thus described, the NEAR value actually employed will correspond to the closest valid value in the set of functional values.

Near lossless encoder block 134 preferably retrieves the three YCbCr components from RAM buffer A 122 and performs near lossless compression thereof according to the near lossless JPEG-LS algorithm using the calculated NEAR value and additional predefined parameters. The near lossless compressed YCbCr stream is typically stored in a RAM buffer C 122.

A clear channel functionality, described herein as implemented by clear channel 124, is preferably implemented by retrieval of the parsed YCbCr stream from RAM buffer 122 and addition of appropriate headers and markers so as to comply with the JPEG-LS. The YCbCr components are preferably multiplexed by an ES multiplexer 130 to produce an output ES (LOES) and sent to a FIFO buffer 128 for CBR transmission to MPEG system mux block 82 (Fig. 3). The LOES additionally typically comprises a PTS and appropriate headers and markers.

Optionally, clear channel 124 generates up to two additional data streams corresponding to the VBI and HBI data extracted from the LDI stream by parser 118 The two additional data streams are multiplexed to the LOES along with the YCbCr components providing for full video frame transmission. Preferably, the video components multiplexed into the LOES originate from a single compression mode. Optionally, the video components constituting the LOES may originate from different compression mode sources - lossless, near lossless or clear - typically subject to several limitations, as described below.

According to a first limitation, the Cb and Cr components should preferably originate from a similar source; the Y component may be chosen independently from any of the three possible sources - lossless, near lossless or clear.

In field compression mode, identical sources are preferably used for similar components for both fields of a given frame.

Whenever an entire frame is dropped by eDSP 126 such as, for example, in a case where the compressed ES exceeds a maximum link rate, one or more components may be dropped. In such a case the LOES typically comprises a header containing 3:2 pull down information with a repeat last frame request.

The appropriate content of the LOES is typically determined by eDSP 126 via an Encoder Channel Selector register.

If the LOES size, including all headers and markers, is less than a minimum preset LOES size (MLS) appropriate byte stuffing is preferably performed to reach the minimum preset LOES size.

External RAM buffers A, B, and C 122 are preferably used to support storage memory throughout the four pipeline stages. Accordingly, the external RAM typically comprises nine frame buffers, each storing all three YCbCr components of the various compression modes - lossless, near lossless and clear - as illustrated in Fig. 5B. Preferably, the total storage capability amounts to 80 Mbits separated in four banks to enable non-synchronous access by each of the four pipeline stages

In preferred embodiments of the present invention, the RAM buffers typically comprise 4x64 Mbit SDRAM devices with a 16 bit wide data bus resulting in 16 Mw (32 Mbyte) usable address space, as is well-known in the art

The eDSP 126, which preferably performs the control functions of video encoding block 112, communicates with each of the individual blocks and with system controller 20. The eDSP 126 preferably receives the video framing signals for each frame from SDI 70 and a clock signal from clock distribution block 80.

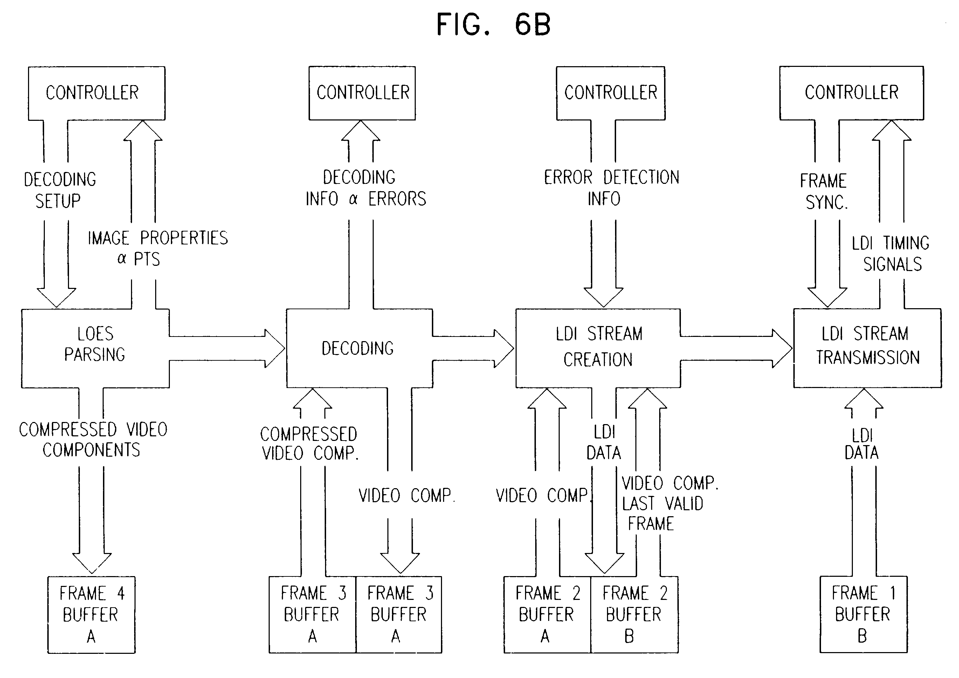

Reference is now made to Figs. 6A and 6B. Fig 6A is a schematic illustration of a preferred implementation of the video decoder block 136 of Fig. 4, which preferably performs lossless/near lossless video decoding. Fig. 6B, which is self-explanatory in light of the discussion below of Fig. 6A, schematically illustrates a preferred decoding process flow as performed by video decoder block 136 of Fig. 6A.

In the apparatus of Fig. 6A lossless/near lossless decoding is preferably performed by a decoding block of the LCA, termed herein dLCA 138, and a decoder control block (dDSP) 144. Both the dLCA 138 and the dDSP 144 are comprised in video decoder block 136, whose operation and configuration are described hereinbelow with reference to the pipeline mode mentioned above.

In a preferred embodiment of the present invention, dLCA 138 receives a LOES stream via a LOES I/F 154, typically from MPEG system demux block 88 (Fig. 4). Both VBR and CBR input modes are preferably supported. The LOES stream is preferably input to a parser 140 providing for several ES processing tasks including separation of the compressed input stream into its components, as described below.

Parser 140 preferably extracts a header comprising header data from the incoming LOES performing an integrity check thereof The header data, including the PTS value, is preferably input to dDSP 144. Parser 140 also preferably performs a LOES component check comparing the actual number of compressed components to an expected number thereof derived from the header data. Both in case of header integrity violation and components number incompatibility, the LOES is typically discarded and no further processing of the frame is performed. Prior to LOES separation byte stuffing, if present, is preferably identified and discarded.

A valid LOES is preferably decomposed by parser 140 into its compressed YCbCr components which are subsequently typically stored into an external RAM buffer A 148 via a Video RAM I/F 150. Uncompressed components (either YCbCr or VBI and HBI), if present in the LOES, are preferably handled by a clear channel 152 prior to multiplexing into the resultant LDI stream as described below. A lossless/near lossless decoder 142 preferably retrieves the compressed YCbCr components from RAM buffer A 148 and performs simultaneous decoding thereof. Each compressed component is preferably decoded in accordance with the applicable compression mode, lossless or near lossless. The resultant decoded YCbCr components are preferably stored in RAM buffer A 148.

A repeat-picture function comprising storing a last decoded full frame in RAM buffer B 148 for possible use in a next frame processing is preferably supported. The repeat-picture functionality may be used either for replacing an erroneous received LOES, or when 3:2 pull down was performed on the source stream.

An LDI mux and I/F 146 preferably retrieves the decoded YCbCr video components and any uncompressed components from RAM buffer A 148 for generating the LDI stream to which the frame timing signals input from dDSP 144 will ultimately be added. The resultant LDI stream is preferably stored in RAM buffer B 148 for further transmission and as repeat-picture source for the next frame. The resultant LDI stream is preferably sent via an I/F to SDI 100 (Fig. 4).

External RAM buffers A and B 148 are preferably used to support storage memory throughout the four pipeline stages. Accordingly, the external RAM preferably comprises four frame buffers, each storing all three components corresponding to each of the pipeline stages, comprising input stream, decoded frame and previous frame, as illustrated in Fig. 6B.

A dDSP 144 which preferably controls the various functional blocks of video decoding block 136 communicates with system controller 20 to enable transmission of control variables and software download. The dDSP 144 preferably receives the frame header data extracted by parser 140 from the input LOES and a clock signal from clock distribution block 96.

Reference is now made to Fig. 7A, is a simplified block diagram illustration of a preferred implementation of the DVBT 170 of Fig. 2.

DVBT 170 preferably receives one of DVB-SPI, DVB-ASI or SMPTE-SDTI TS streams via a SPI I/F 174, ASI I/F 176 or SDTI I/F 188, respectively.

The TS stream is preferably received by a DVB block 178, which validates the TS data integrity and estimates TS bit rate. The TS packets are typically written to a TS FIFO block 180 either at SPI-TS clock rate, typically 1-7 MHz, or PCI/4 clock rate, typically 8.25 MHz for ASI I/F. TS FIFO block 180 is preferably used to gap the clock difference and data width between DVB block 178 and an AAL1 block 182 clock.

AAL1 encoder 182 preferably extracts the TS data from TS FIFO 180 at the PCI/4 clock rate and transforms the TS data into ATM AAL1 PDUs. Optionally, AAL1 encoder 182 incorporates FEC with long interleaving into the stream. The AAL1 PDUs are typically transported to a PCI I/F block 184 for transmission via NIC 46 (Fig. 2) over WAN 22 (Fig. 2).

All functional blocks in Fig. 7A preferably have a bi-directional control channel connected to Controller block 186.

Reference is now made to Fig. 7B, which is a simplified block diagram illustration of a preferred implementation of DVBR 172 of Fig. 2.

DVBR 172 preferably receives ATM AAL1 PDUs from NIC 46 via a PCI I/F block 188. The received data is preferably transferred to an AAL1 decoder 190, which extracts a PDU payload from the PDUs and optionally performs de-interleaving and error correction.

A dejitter block 192 preferably receives the output stream from AAL1 decoder 190 and performs jitter removal for the incoming stream. The dejittered stream is preferably input to a DVB block 194, which preferably reconstructs the TS packets prior to delivery to one of SPI I/F 196, ASI I/F 198 or SDTI I/F 200 for further transmission to a corresponding device 14 of Fig. 1 or Fig. 2. Typically, the packet reconstruction includes TS header completion and TS error flag handling.

All functional blocks of Fig. 7B preferably have a bi-directional control channel connected to Controller block 202.

Reference is now made to Figs. 8 and 9 which are schematic illustrations of preferred implementations of ANC data block 76 of MPGE card 62 of Fig. 23 and ANC data block 92 of MPGD card 60 of Fig. 4, respectively. The ANC data blocks 76 and 92 are preferably responsible for handling the ancillary data, such as the VBI data and the EDH check-words, as described hereinabove.

Typically, the first twenty one horizontal scanning lines in each video field are disposed in the VBI. Some of these lines may contain Teletext information; other lines may contain test signals, ghost-cancellation signals, network time stamp, or closed-caption signals; still other lines contain VITC/DVITC or other signals, as is well-known in the art. Typically, the VBI contains 216 Kb per component and field which may be reduced to several Kb per line employing VBI processing procedures as described hereinbelow.

The ANC data blocks 76 and 92 preferably support several different transmission methods adapted for the various ancillary data types.

A relatively bandwidth-inefficient method which may be used for unformatted or non-standard ancillary data signals comprises extracting a whole VBI line and transmitting it to a receiving Hi-TV 10 (Fig. 1) for embedding in the outgoing SDI stream in synch with the video.

A method of very high bandwidth efficiency, suitable for data types having a known standard format, comprises demodulating and transmitting only the original information represented by the VBI line.

Compression of desired VBI lines along with the video signal, using any appropriate method such as the MPEG-2 algorithm, is another reasonably bandwidth-efficient method supported by the ANC blocks. This method is preferably used with data types robust enough to survive such compression.

For constant data types, such as test signals and ghost-canceling reference signals, a method comprising generation of constant signals at the video output may be employed.

In accordance with a preferred embodiment of the present invention, ANC data block 76 illustrated in Fig. 8, receives ancillary data, as for example DVITC data, extracted by SDI block 70 (Fig. 3) as original information bits along with the PTS values. ANC data block 76 processes the DVITC data, typically comprising two identical 90 bits per line per field, with a typical maximal compression rate of 1.92 Mbps. The remaining ancillary data including the EDH check-words are typically transmitted in a transparent mode.

Preferably, ANC data block 76 comprises a 32 Kw external RAM 156, an appropriate DSP 158 and a 8Kw output buffer 160.

For each field, all the twenty VBI lines are preferably written into external RAM 156. DSP 158 takes whatever is needed per configuration for processing, such as, for example, two lines per field for an embodiment supporting the compression of the DVITC data only. All the other lines and the EDH check-words are typically passed transparently.

The encoded information is output in a CBR mode on a frame basis. The delay induced by the operation of ANC data block 76 typically comprises two frames - one frame for filling the buffer and processing it and an additional one frame for outputting the data.

ANC data block 92 depicted in Fig. 9 typically decodes and decompresses the compressed DVITC lines written to an input buffer 162, employing a suitable DSP 164, as known in the art. The decompressed lines are preferably written to an output external buffer 166 for sending to SDI block 100.

The delay associated with ANC data block 92 typically two frames. It is appreciated that the output from block 76 is typically one and the same as the input to block 92, so that the total ancillary data encoding-decoding delay typically amounts to three frames.

Reference is now made to Fig. 10, which is a schematic block diagram illustration of a preferred implementation of dejittering block 108 of Fig. 4. The apparatus of Fig. 10 may also be used as a preferred implementation of the dejitter block 192 of Fig. 7B.

As mentioned above, cells propagating through an ATM network, such as network 22, typically experience a variable delay known as jitter. In order to enable playing of high quality viewing-rate video in accordance with existing standards, the jitter, also known as CDV, should be kept within prescribed limits.

When used in conjunction with STC block 96 and MPEG system demux block 88 in MPGD 60 of Fig. 4, dejittering block 108 typically provides for keeping the jitter values within the prescribed limits It is also responsible for the extraction of the clock rate of the transmitting MPGE 62, preferably received, at a typical minimum rate of 10 Hz, in the form of PCR values embedded within the TS.

A decimation block 166 preferably receives either 124-byte or 47-byte data blocks from AAL block 106 of Fig. 4 and generates 188-bytes TS packets therefrom. The TS packets are preferably input to a PLL1 block 168.

PLL1 block 168 preferably comprises a 3rd order PLL filter loop responsible for the initial smoothing of the incoming jittered CBR stream. The PLL1 block 168 preferably receives the incoming TS packets and, typically using an adaptive clock recovery method, filters part of the phase jitter. The PLL1 block 168 preferably sends the resultant partially dejittered TS packets to MPEG system demux block 88.

MPEG system demux block 88 preferably extracts the PCR values from the TS packets and inputs the PCR values to STC block 96 STC block 96 preferably uses a second 3rd order PLL filter loop to drive the STC of MPGD 60 of Fig. 4 and to keep tracking on the STC of corresponding MPGE 62 of Fig. 3.

It will be appreciated by persons skilled in the art that the present invention is not limited to what has been particularly shown and described hereinabove. Rather the scope of the present invention includes both combinations and subcombinations of features described hereinabove as well as variations and developments thereof which would occur to a person of skill in the art upon reading the foregoing description, and which are not in the prior art.

## Claims

1. Apparatus for video, audio and data communication of a transport stream via an ATM WAN, the transport stream comprising at least one of at least one video stream, at least one data stream, and at least one audio stream, the apparatus comprising:
a video service module for modifying at least one video stream;
a data and audio services module for modifying at least one data stream and at least one audio stream;
a network interface module, communicating with the video service module and the data and audio services module, and operative to transmit the modified streams over the ATM WAN; and
a controller communicating with said video service module, said data and audio service module, and said network interface module for controlling the various functions thereof.

2. Apparatus for lossless/near lossless compression encoding of a video stream for transmission over an ATM WAN, the apparatus comprising:
an encoder block operative to encode the video stream by applying at least one compression mode thereto, thereby generating a transport stream;
a decision block operative to determine a decision NEAR parameter based, at least in part, on lossless compression data received from the encoder block, said NEAR parameter being used to determine an appropriate near lossless mode, and
a control block, communicating with the encoder block and the decision block and operative to determine an appropriate content of the transport stream.

3. Apparatus for lossles/near lossless decompression decoding of a transport stream transmitted over an ATM WAN, the apparatus comprising:
a decoder block operative to decode the transport stream by applying one or more decompression modes thereto, thereby generating a video stream; and
a decision block operative to determine a set of appropriate parameters to be applied by the decoder block for the decompression of the transport stream based, at least in part, on a decision NEAR parameter employed in the compression of the transport stream.

4. Apparatus for video ancillary data communication over an ATM WAN, the apparatus comprising:
a processor operative to modify at least a part of at least one ancillary data component of an ancillary data stream embedded within a video stream; and
at least one memory device communicating with the processor and operative to store:
a representation of the ancillary data stream comprising a representation of a full content of the ancillary data embedded within the video stream; and
a representation of an ancillary data elementary stream comprising a content of the ancillary data embedded within the video stream.

5. Apparatus for the communication of dejittered real time viewing rate video over an ATM WAN, the apparatus comprising:
a dejittering block operative to filter at least part of a jitter present in a transport stream transmitted over the ATM WAN, said transport stream corresponding to the real time viewing rate video stream, the dejittering block being further operative to extract a clock rate of a corresponding transmitting source embedded in the transport stream; and
an STC block operative to generate an STC drive a decoder STC in response to the clock rate of the transmitting source, as extracted by the dejittering block.

6. A method for video, audio and data communication via an ATM WAN, the method comprising:
providing a video service module for modifying at least one video stream,
providing a data and audio services module for modifying at least one data stream and at least one audio stream; and
providing a network interface module for transmitting the modified streams over the ATM WAN.

7. A method for lossles/near lossless compression of a video stream for transmission over an ATM WAN, the method comprising:
providing an encoder block for compressing the video stream into a transport stream by applying at least one compression mode;
providing a decision block for determining a decision NEAR parameter corresponding to lossless compression data received from the encoder block, said NEAR parameter determining an appropriate near lossless mode, and
providing a control block for determining an appropriate content of the transport stream.

8. A method for lossless/near lossless decompression of a transport stream transmitted over an ATM WAN, the method comprising:
providing a decoder block for decompressing the transport stream into a video stream by applying one or more decompression modes; and
providing a decision block for determining a set of appropriate parameters to be applied by the decoder block for the decompression of the transport stream, based, at least in part, on a decision NEAR parameter employed in the compression of the transport stream.

9. A method for video ancillary data communication over an ATM WAN, the method comprising:
providing a processor for modifying at least part of at least one ancillary data component of an ancillary data stream embedded within a video stream;
providing one or more memory devices communicating with the processor for storing the ancillary data stream, the stored ancillary data stream comprising:
a full content of ancillary data embedded within the video stream; and
an ancillary data elementary stream comprising the full content of the ancillary data embedded within the video stream.

10. A method for the communication of a dejittered real time viewing rate video stream over an ATM WAN, the method comprising:
providing a dejittering block for filtering at least part of a jitter present in a transport stream transmitted over the ATM WAN, said transport stream corresponding to the real time viewing rate video stream, and for extracting a clock rate of a corresponding transmitting source embedded in the transport stream, and
providing an STC block for producing an STC and driving a decoder STC in response to the clock rate of the transmitting source extracted by the dejittering block.
